# EUROPEAN PATENT SPECIFICATION

(11) **EP 1 471 693 B1**
(45) Date of publication and mention of the grant of the patent: **18.06.2008**
(21) Application number: 04252388.6
(22) Date of filing: 23.04.2004
(51) Int. Cl.: H04L 12/56

(54) **System and method for managing the association of a device with a piconet**
System und Verfahren zur Verwaltung der Zuordnung eines Geräts zu einem Piconetz
Système et procédé pour gérer l'association d'un dispositif à un picoréseau

(30) Priority: 25.04.2003 KR 2003026425
(43) Date of publication of application: 27.10.2004
(73) Proprietor: SAMSUNG ELECTRONICS CO., LTD., Suwon-si, Gyeonggi-do (KR)
(72) Inventor: Hong, Seong-seol, 109-1805 Dongsuwon, Suwon-si Gyeonggi-do (KR)
(74) Representative: Robinson, Ian Michael

(56) References cited:
- LAN/MAN STANDARDS COMMITTEE OF THE IEEE COMPUTER SOCIETY: "Draft P 802,15,3, Part 15.3: Wireless Medium Access Control (MAC) and Physical Layer (PHY) Specifications for High Rate Wireless Personal Area Networks (WPAN), pg:1-xiv, chptrs: 7, 8" 17 February 2003 (2003-02-17), DRAFT P802.15.3/D17, PAGE(S) 107-228 , XP002294149 * chapter 5.3.3 * * chapters 7.3.1, 7.4.4 and 7.5.1 * * chapter 8.3 * * chapter 8.9.2 *

## Description

The present invention relates to a system and method for managing the association of a device with a piconet.

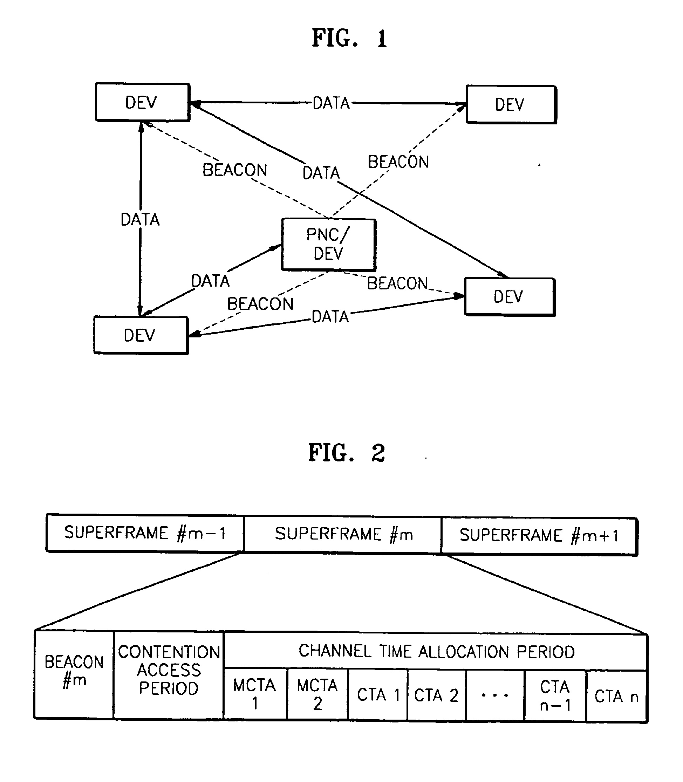

Figure 1 is a block diagram of a piconet according to IEEE 802.12.3 standards.

According to IEEE 802.12.3 standards, a piconet is a wireless ad-hoc data communication system in which individual data devices can communicate with one another. The piconet is distinguished from other types of data networks due to its communication availability within a range of 10m. In other words, the piconet is discerned from conventional Local Area Networks (LANs), Metropolitan Area Networks (MANs), and Wireless Area Networks (WANs).

Referring to Figure 1, the piconet includes a plurality of devices, one of which is a piconet coordinator. The piconet coordinator provides timing of the piconet via a beacon. The piconet coordinator also manages requests for Quality of Service (QOS), manages a power save mode, and controls access to the piconet. IEEE 802.12.3 standards prescribe that a device can constitute a subsidiary piconet. An IEEE 802.15.3 Media Access Control (MAC) provides for a fast connection, an ad-hoc network, data transmission to support QOS, security, dynamic membership, and efficient data transmission.

Devices which request to be involved in the piconet must undergo an association process. The association of the devices with the piconet requires device identifications (IDs), i.e., unique piconet identifiers, to be allocated to the devices. In order to reduce overhead in the wireless ad-hoc data communication system (piconet), instead of 8-octet addresses, 1-octet address is allocated to each of the devices. When a new device associates with the piconet, the piconet coordinator broadcasts a beacon containing information regarding the existing devices and the new device to all of the devices associated with the piconet. The broadcasting of the beacon provides the new device with information regarding the existing devices and allows the existing devices to recognize the new device. When a device requests to dissociate from the piconet or the piconet coordinator requests a dissociation of the device from the piconet, the device must undergo a disassociation process.

Figure 2 is a block diagram illustrating the structure of a piconet superframe according to IEEE 802.15.3 standards.

The timing of the piconet is based on a superframe. The superframe includes three parts, i.e., a beacon, a contention access period, and a channel time allocation period. The beacon is used to set time allocation and transmit management information regarding the piconet. The contention access period is used to transmit command and/or asynchronous data. The channel time allocation period is used to connect a command, an isochronous stream, and asynchronous data. The contention access period uses Carrier Sense Multiple Access with Collision Avoidance (CSMA/CA) for media access, while the channel time allocation period uses Time Division Multiple Access (TDMA) for the media access. The channel time allocating period includes management channel time allocation slots (MCTAs), which are used for communication between the piconet coordinator and the devices, and channel time allocation slots (CTAs) which are for communication among the devices.

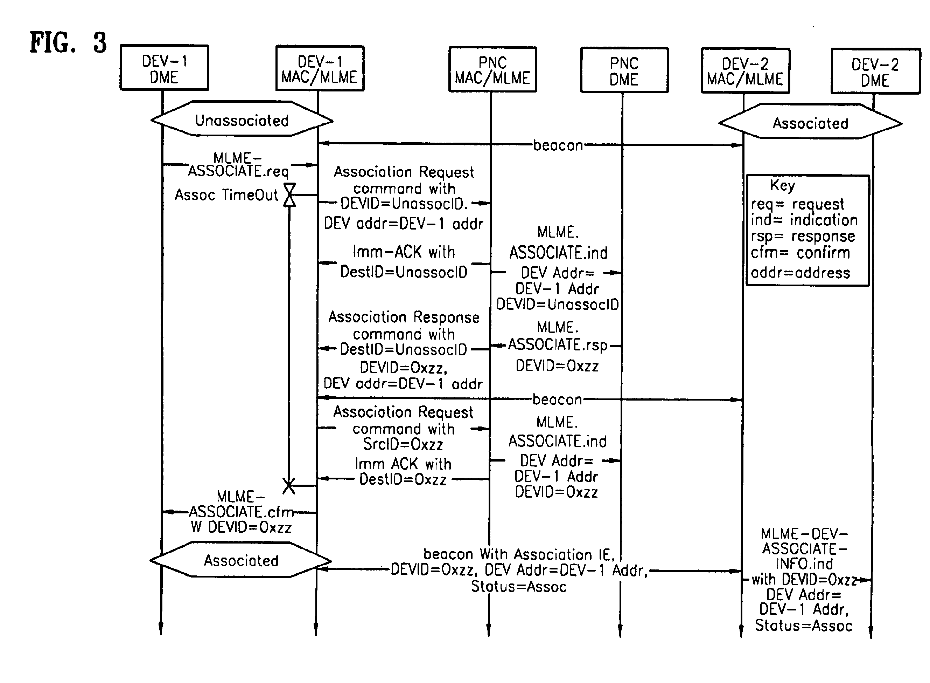

Figure 3 illustrates a process of associating a device with the piconent according to IEEE 802.15.3 standards. Referring to Figure 3, a first device transmits a first association request command to a piconet coordinator to request an allocation of an ID. When the piconet coordinator receives the first association request command from the first device, the piconet coordinator transmits a first immediate acknowledgement (ACK) to the first device that indicates that the first association request command has been properly received, allocates a device ID to the first device, and transmits an association response command which includes the device ID, to the first device. Thereafter, the first device receives the first immediate acknowledgement (ACK) and the association response command from the piconet coordinator and then transmits a second association request command to the piconet coordinator that indicates that the device ID has been properly allocated to the first device. The piconet coordinator transmits a second immediate acknowledgement (ACK) to the first device that indicates that the second association request command has been properly received. When the first device receives the second immediate ACK from the piconet coordinator, it is determined that the first device has associated with the piconet. The piconet coordinator then broadcasts a beacon that includes the device ID to all devices associated with the piconet. After all devices associated with the piconet receive the beacon, they become aware of the association of the first device with the piconet. As illustrated in Figure 3, Device Management Entities (DMEs) manage devices, and MAC Layer Management Entities (MLMEs) manage MAC layers. According to IEEE 802.15.3 standards, communications within the piconet can be achieved via the MLMEs.

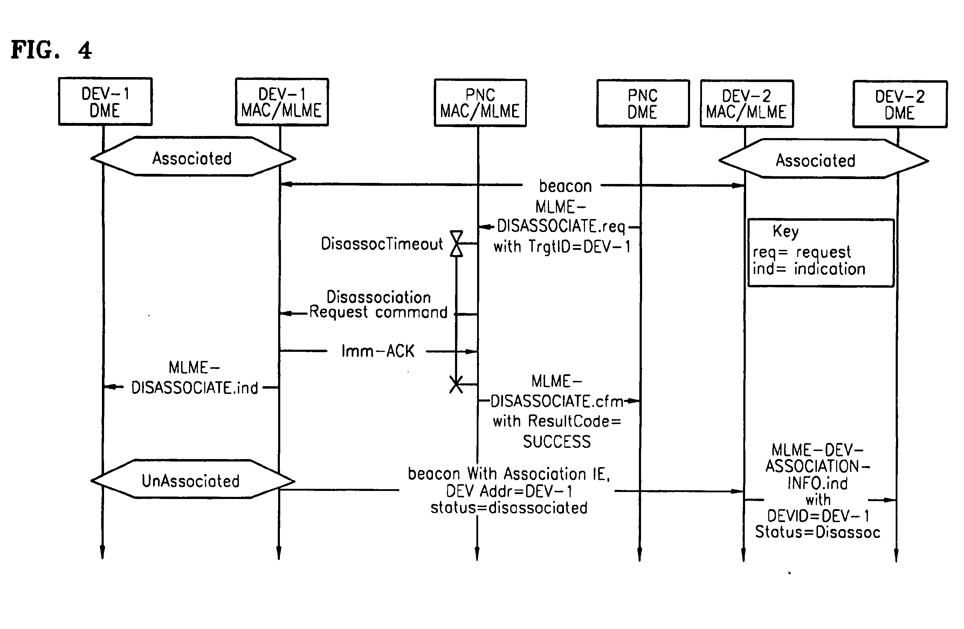

Figure 4 illustrates a process of disassociating a device from the piconet, according to IEEE 802.15.3 standards.

In order to maintain association with the piconet, all devices must transmit frames to the piconet coordinator within a predetermined period of time, i.e., an Association Timeout Period (ATP). If the piconet coordinator does not receive a frame from a device within the ATP, the piconet coordinator disassociates the device from the piconet. In particular, devices in an Asynchronous Power Save (APS) mode must transmit frames to the piconet coordinator within the ATP to maintain their association with the piconet and prevent their disassociation from the piconet.

Referring to Figure 4, when the piconet coordinator does not receive a frame from the first device within the ATP, the piconet coordinator transmits a disassociation request command which includes the device ID, to the first device. The first device receives the disassociation request command from the piconet coordinator and transmits an immediate ACK to the piconet coordinator that indicates that the disassociation request command has been properly received. When the piconet coordinator receives the immediate ACK, the piconet coordinator determines that the first device has disassociated from the piconet and broadcasts a beacon with the device ID to all devices associated with the piconet. When the devices receive the beacon, the devices become aware of the disassociation of the first device from the piconet. As previously described with reference to Figure 3, DMEs manage the devices, and MLMEs manage MAC layers.

As described above, association and disassociation processes according to IEEE 802.15.3 require the exchange of many frames between devices and a piconet coordinator, resulting in wasting an effective period and producing extra overhead.

According to the present invention there is provided an apparatus and method as set forth in the appended claims. Preferred features of the invention will be apparent from the dependent claims, and the description which follows.

The present invention provides a system and method for managing the association of a device with a piconet in which the devices remain associated with the piconet without transmitting frames to a piconet coordinator for a long period of time.

According to an aspect of the present invention, there is provided an apparatus that associates devices with a piconet, characterised by: an association device list updater arranged to update an association device list of a first device by referring to an association device list, on which the devices associated with the piconet are registered and association elapsed periods of the devices indicating an elapsed period since the devices associated with the piconet are recorded in a beacon broadcast by a piconet coordinator; an association elapsed period extractor arranged to extract an association elapsed period of a second device from the updated association device list when the first device requests communication with the second device registered on the updated association device list; and an inter-device communicator arranged to perform the communication between the first and second devices if the extracted association elapsed period is shorter than an association timeout period.

According to another aspect of the present invention, there is provided an apparatus that coordinates associations of devices with a piconet, characterised by: a second association request command receiver, arranged to receive from a first device, a second association request command that indicates that a device ID has been properly allocated to the first device; an initial association elapsed period setter arranged to set an association elapsed period of the first device to an initial value when the second association request command receiver receives the second association request command, the association elapsed period indicating an elapsed period since the first device associated with the piconet; an association device list maker arranged to register the first device and record the set association elapsed period on an association device list so that the set association elapsed period corresponds to the first device; and a beacon frame transmitter arranged to broadcast a beacon with the association device list to the devices.

According to still another aspect of the present invention, there is provided a system that manages associations of devices with a piconet, characterised by: a piconet coordinator arranged to receive, from a first device, a second association request command that indicates a proper allocation of a device ID to the first device, set an association elapsed period of the first device to an initial value, the association elapsed period indicating a period since the first device associated with the piconet, register the first device and record the association elapsed period to an association device list so that the first device corresponds to the association elapsed period, and broadcast the association device list in a beacon to the devices; and a piconet-device associator arranged to update an association device list of the first device by referring to the association device list received in the beacon, extract an association elapsed period of a second device registered on the updated association device list from the updated association device list when the first device requests communication with the second device, and perform the communication between the first and second devices if the extracted association elapsed period is shorter than an association timeout period.

According to yet another aspect of the present invention, there is provided a method of associating devices with a piconet, characterised by: updating an association device list of a first device by referring to an association device list, on which the devices associated with the piconet are registered and association elapsed periods of the devices are recorded, in a beacon broadcast by a piconet coordinator the association elapsed periods indicating a period since the devices associated with the piconet; if the first device requests communication with a second device registered on the updated association device list, extracting an association elapsed period of the second device from the updated association device list; and if the extracted association elapsed period is shorter than an association timeout period, performing the communication between the first and second devices.

According to yet another aspect of the present invention, there is provided a method of managing associations of devices with a piconet, characterised by: receiving, from a first device, a second association request command that indicates that a device ID has been properly allocated to the first device, setting an association elapsed period of the first device which indicates a period since the first device associated with the piconet, registering the first device and recording the set association elapsed period to an association device list so that the first device corresponds to the set association elapsed period, and broadcasting the association device list in a beacon to the devices; and updating the association device list of the first device by referring to the association device list, extracting an association elapsed period of a second device registered on the updated association device list from the updated association device list if the first device requests communication with the second device, and performing the communication between the first and second devices if the extracted association elapsed period is shorter than an association timeout period.

According to yet another aspect of the present invention, there is provided a beacon frame for broadcast by a piconet coordinator, characterised by an association device list on which devices associated with a piconet are registered and association elapsed periods of the devices are recorded in the beacon frame, the association elapsed periods indicating a period since the devices associated with the piconet.

According to yet another aspect of the present invention, there is provided a beacon frame. The beacon frame includes computer-readable recording medium comprising a computer-executable program arranged to perform the method of any of claims 13 to 24.

The above and other features and advantages of the present invention will become more apparent by describing in detail exemplary embodiments thereof with reference to the attached drawings in which:
Figure 1 is a block diagram of a piconet according to IEEE 802.15.3 standards;
Figure 2 is a block diagram illustrating the structure of a piconet superframe according to IEEE 802.15.3 standards;
Figure 3 illustrates a process of associating a device with the piconent, according to IEEE 802.15.3 standards;
Figure 4 illustrates a process of disassociating a device from the piconet, according to IEEE 802.15.3 standards;
Figure 5 illustrates the structure of a system that manages associations of devices with a piconet, according to a first embodiment of the present invention;
Figure 6 illustrates the structure of an MAC header according to IEEE 802.15.3;
Figure 7 illustrates the structure of an association request command according to IEEE 802.15.3;
Figure 8 illustrates the structure of an immediate ACK according to IEEE 802.15.3;
Figure 9 illustrates the structure of an association response command according to IEEE 802.15.3;
Figure 10 illustrates the structure of a beacon according to IEEE 802.15.3;
Figure 11A illustrates the structure of an information element field according to a second embodiment of the present invention;
Figure 11B illustrates the structure of an association device list field included in the information element field of Figure 11A;
Figure 12 illustrates the structure of a probe request command according to IEEE 802.15.3;
Figure 13 illustrates the structure of a probe response command according to IEEE 802.15.3;
Figure 14 illustrates the structure of a device information command according to the second embodiment of the present invention;
Figure 15 illustrates the structure of a peer information command, according to the second embodiment of the present invention;
Figure 16 illustrates a process of maintaining associations of devices with a piconet according to a third embodiment of the present invention;
Figures 17A and 17B are flowcharts illustrating a method of associating a device with a piconet according to the third embodiment of the present invention; and
Figure 18 is a flowchart illustrating a method of coordinating an association of a device with a piconet according to a fourth embodiment of the present invention.

Hereinafter, preferred embodiments of the present invention will be described in detail with reference to the attached drawings.

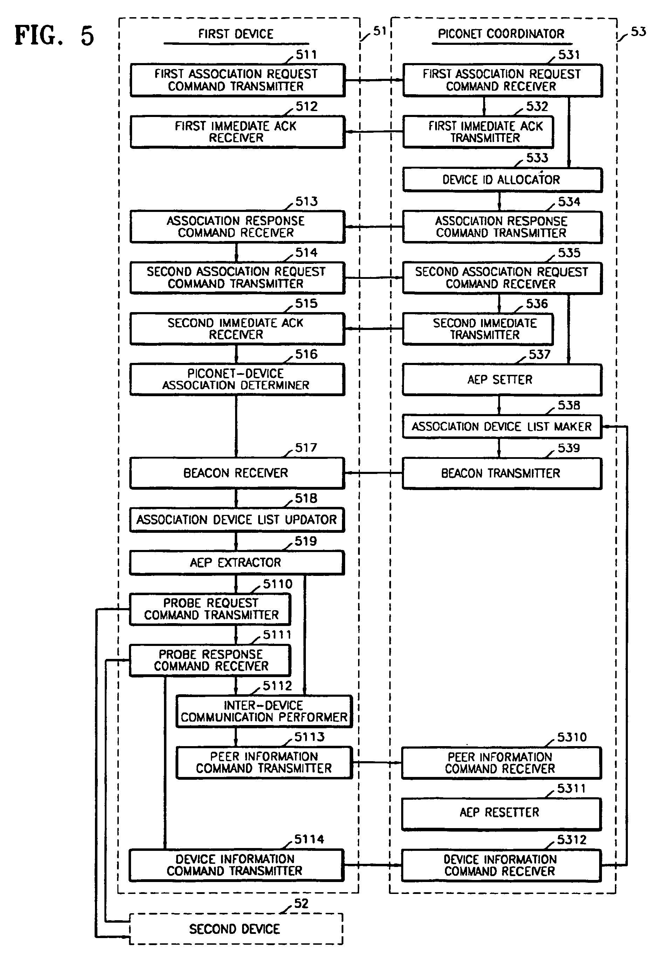

Figure 5 is a block diagram illustrating the structure of a system that manages associations of devices with a piconet according to a first embodiment of the present invention. Referring to Figure 5, the system includes a first device 51 (which can also be called a piconet device associator) and a piconet coordinator 53 (which can also be called a piconet device association coordinator).

The piconet coordinator 53 receives a second association request command from the first device 51 that indicates that a device ID has been properly allocated to the first device 51. Next, the piconet coordinator 53 sets an association elapsed period (AEP) of the first device 51 to an initial value, registers the first device, and records the set AEP on an association device list so as to correspond the set AEP.

The first device 51 updates the association device list of the first device 51 by referring to the association device list registered and recorded by the piconet coordinator 53. For a communication between the first device and a second device 52 registered is the association device list, the first device 51 extracts an AEP of the second device 52 from the updated association device list. If the extracted AEP is shorter than an ATP, the first device 51 performs the communication with the second device 52.

A piconet device association apparatus 51 includes a first association request command transmitter 511, a first immediate ACK receiver 512, an association response command receiver 513, a second association request command transmitter 514, a second immediate ACK receiver 515, a piconet device association determiner 516, a beacon receiver 517, an association device list updater 518, an AEP extractor 519, a probe request command transmitter 5110, a probe response command receiver 5111, an inter-device communicator 5112, a peer information command transmitter 5113, and a device information command transmitter 5114.

A piconet device association coordination apparatus **53** includes a first association request command receiver 531, a first immediate ACK transmitter 532, a device ID allocator 533, an association response command transmitter 534, a second association request command receiver 535, a second immediate ACK transmitter 536, an AEP initializer 537, an association device list maker 538, a beacon frame transmitter 539, a peer information command receiver 5310, an AEP resetter 5311, and a device information command receiver 5312.

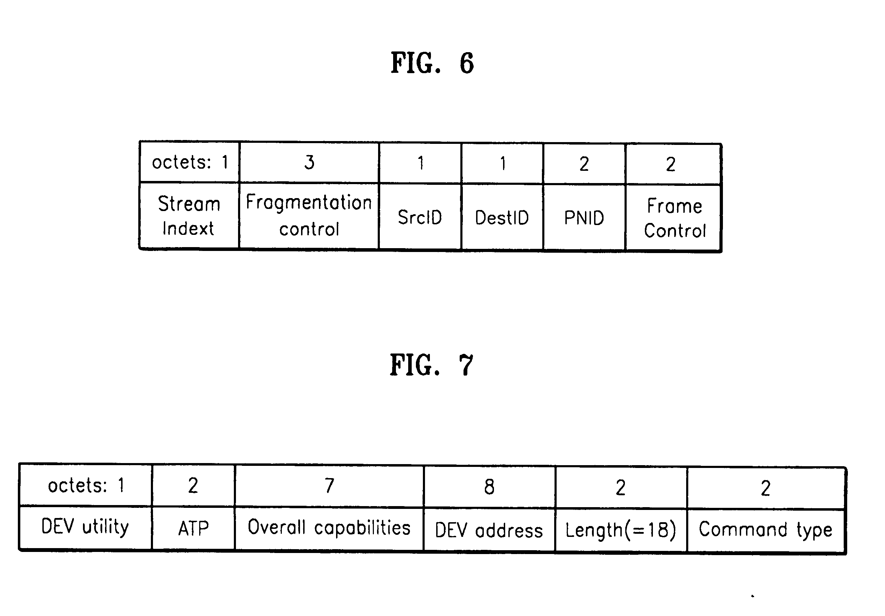

Figure 6 illustrates the structure of an MAC header according to IEEE 802.15.3. Referring to Figure 6, the MAC header includes 10 octets, and is added to a front portion of each frame transmitted within the piconet. The MAC header includes a frame type field, which indicates the type of a frame, a source ID field, which indicates a source ID of a received frame, and a destination ID field, which indicates a destination ID of the received frame.

The first association request command transmitter 511 of the first device 51 transmits a first association request command to the piconet coordinator 53 to request an allocation of a device ID to the first device 51. The first association request command receiver 531 of the piconet coordinator 53 receives the first association request command from the first device 51.

Figure 7 illustrates the structure of an association request command according to IEEE 802.15.3. Referring to Figure 7, the MAC header of Figure 6 is added to the association request command of Figure 7. The association request command includes a source ID field with an unassociated ID, a destination ID field with a piconet coordinator ID, and a device address field with an address of a device transmitting the association request command. In other words, when a source ID is an unassociated ID, it means the device does not have an ID and requests an allocation of an ID to the device with the address recorded in the device address field.

When the first association request command receiver 531 receives the first association request command, the first immediate ACK transmitter 532 of the piconet coordinator 53 transmits a first immediate ACK to the first device 51 that indicates that the first association request command has been properly received. The first immediate ACK receiver 512 of the first device 51 receives the first immediate ACK from the piconet coordinator 53.

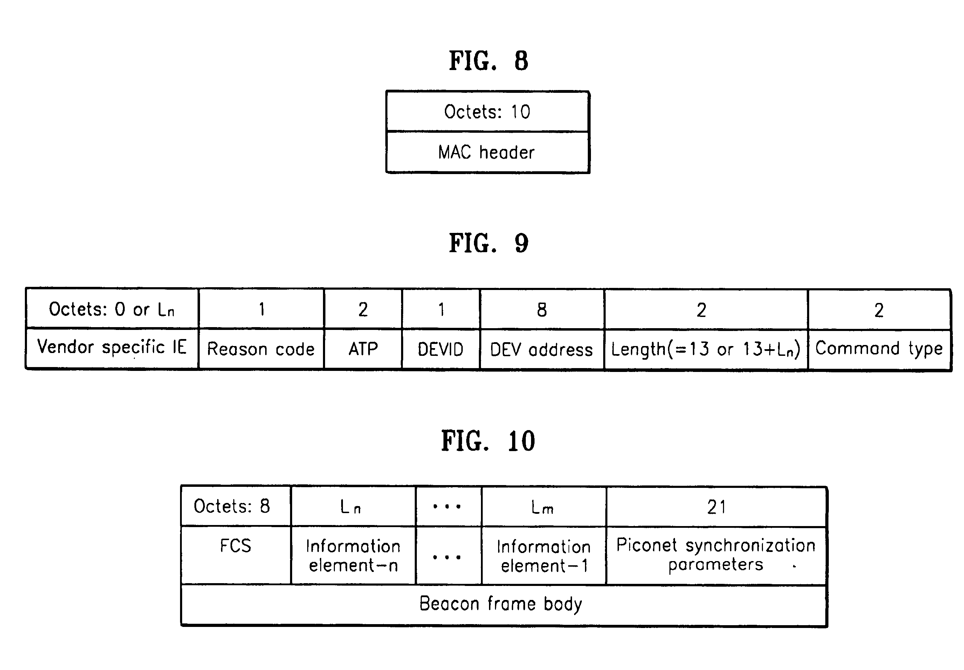

Figure 8 illustrates the structure of an immediate ACK according to IEEE 802.15.3. Referring to Figure 8, the immediate ACK includes a MAC header and informs a device that a piconet coordinator has properly received a frame transmitted by the device immediately before the immediate ACK was received by the device. In other words, when the first device 51 transmits a first association request frame and then receives the first immediate ACK, the first device 51 can determine that the piconet coordinator 53 has properly received the first association request frame.

When the first association request command receiver 531 receives the first association request command, the device ID allocator 533 of the piconet coordinator 53 allocates a device ID to the first device 51. The association response command transmitter 534 of the piconet coordinator 53 transmits an association response command, which includes the device ID, to the first device 51. The association response command receiver 513 receives the association response command from the piconet coordinator 53.

Figure 9 illustrates the structure of an association response command according to IEEE 802.15.3. Referring to Figure 9, the MAC header of Figure 6 is added to the association response command of Figure 9. The association response command includes a source ID field with a piconet coordinator ID, a destination ID field with an unassociated ID, and a device ID field with a device ID Qxzz that is allocated by the piconet coordinator 53. In other words, when the destination ID is the unassociated ID and a device ID is recorded in the device ID field, then the recorded device ID is a newly allocated ID.

The second association request command transmitter 514 of the first device 51 transmits a second association request command to the piconet coordinator 53 to indicate that the device ID of the association response command has been properly allocated to the first device 51. The second association request command receiver 535 of the piconet coordinator 53 receives the second association request command. When the first device 51 receives the association response command, the first device 51 transmits the second association request command to the piconet coordinator 53 which informs the piconet coordinator 53 of the proper allocation of the device ID. Here, a source ID field of the second association request command includes the newly allocated device ID Qxzz.

When the second association request command receiver 535 receives the second association request command, the second immediate ACK transmitter 536 of the piconet coordinator 53 transmits a second immediate ACK to the first device 51 which indicates that the second association request command has been properly received. The second immediate ACK receiver 515 of the first device 51 receives the second immediate ACK from the piconet coordinator 53. Here, like the first immediate ACK, the second immediate ACK includes an MAC header, which informs a device that a piconet coordinator has properly received a frame transmitted by the device immediately prior to the reception of the second immediate ACK by the device. In other words, when the first device 51 transmits the second association request command and then receives the second immediate ACK, the first device 51 can determine that the piconet coordinator has properly received the second association request command.

When the second immediate ACK receiver 516 receives the second immediate ACK, the piconet device association determiner 516 of the first device 51 determines that the first device 51 has associated with the piconet. To be more specific, when the first device 51 receives the second immediate ACK, the first device 51 can determine that the piconet coordinator 53 has properly received the second association request command. Here, an MLME of the first device 51 informs a DME of the first device 51 that the device ID has been allocated to the first device 51, and the DME of the first device 51 determines that the first device 51 has associated with the piconet.

When the second association request command receiver 535 receives the second association request command, the AEP initializer 537 sets an AEP of the first device 51 to an initial value, i.e., "0". An IEEE 802.15.3 ATP according to the present invention refers to a critical period during which devices associate with a piconet in spite of their movements, breakdowns, and so forth. However, when the piconet coordinator 53 does not receive a frame from a device within the existing IEEE 802.15.3 ATP, the piconet coordinator 53 disassociates the device from the piconet. The disassociated device must undergo an association process again to re-associate with the piconet. This results in loss of channel resources in a wireless communication environment in which channels are limited and there are many frames exchanged among devices. In order to solve these problems, the first embodiment of the present invention employs the AEP as a new information element. The AEP refers to an elapsed period after an instant in time when a device associates with the piconet. More broadly, the AEP refers to an elapsed period after an instant in time when a device informs the piconet that the device has associated with the piconet. When the piconet coordinator 53 receives the second association request command from the first device 51, the piconet coordinator 53 determines that the first device 51 has associated with the piconet. Thus, the AEP of the first device 51 is set to the initial value, i.e., "0". Devices associated with the piconet increase their AEPs using their local clocks. If an AEP of a device is shorter than an ATP, i.e., it can be assumed that the device has associated with the piconet, the device can immediately communicate with another device. However, if the AEP of the device is not shorter than the ATP, i.e., it cannot be assumed that the device has associated with the piconet, the device must undergo another process.

The association device list maker 538 of the piconet coordinator 53 registers the first device and records the set AEP on the association device list so as to correspond to the set AEP. The beacon transmitter 539 of the piconet coordinator 53 broadcasts a beacon which includes the association device list. The beacon receiver 517 of the first device 51 receives the beacon from the piconet coordinator 53. Thus, all devices associated with the piconet receive the beacon. As a result, the first device 51, the second device 52, and other devices associated with the piconet perceive that the first device 51 has re-associated with the piconet and the AEP has a value of "0". Thereafter, when both a device that requests a communication with the first device 51 and the first device 51 have associated with the piconet within the AEP, the device can immediately communicate with the first device 51.

Figure 10 illustrates the structure of a beacon according to IEEE 802.15.3. Referring to Figure 10, the beacon includes as many information element fields as devices associated with the piconet. Information for managing the devices associated with the piconet is recorded in the information element fields.

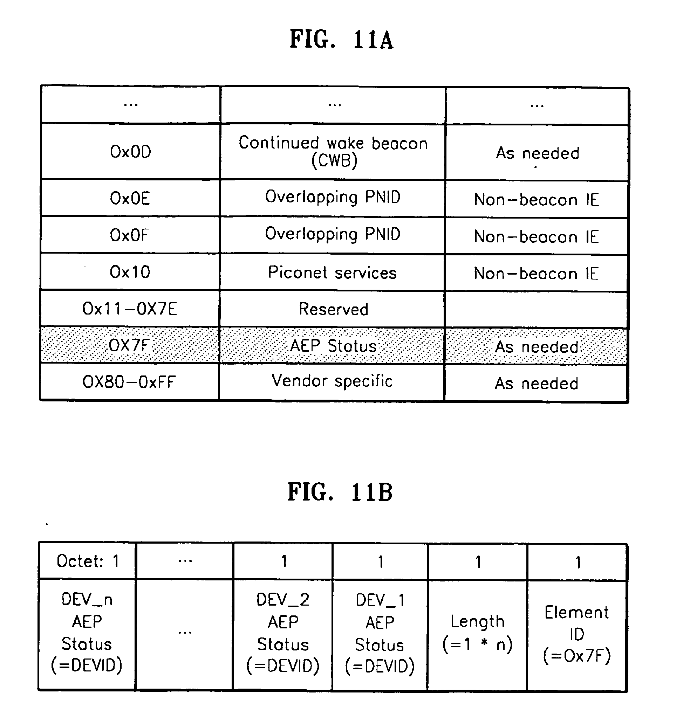

Figure 11A illustrates the structure of the information element field of Figure 10. Referring to Figure 11A, according to IEEE 802.15.3 standards, address 0x7F of the beacon is reserved. According to the second embodiment of the present invention, 0x7F of the beacon is used as an association device list field. The association device list field registers the devices and the AEPs of the devices so that the devices correspond to the AEPs.

Figure 11B illustrates the structure of the association device list field of Figure 11A. Referring to Figure 11B, the association device list field includes an element ID field, a length field, and AEP fields of the devices. The association device list field registers the AEP of the first device 51 and AEPs of other devices that have already associated with the piconet. Since the first device 51 is a newly associated device, the AEP field of the first device 51 registers a value of "0". The AEP fields of the devices that have already associated with the piconet register AEPs at instants in time when the other devices associate with the piconet. As previously described, an AEP refers to the elapsed period after the instant in time when a device informs the piconet coordinator 53 that the device has associated with the piconet. An AEP of the device is set to an initial value, i.e., "0", at the instant in time when a device informs the piconet coordinator 53 that the device has associated with the piconet. The AEP of the device increases using a local clock of the piconet coordinator 53. The piconet coordinator 53 increases AEPs of other devices associated with the piconet using its local clock and checks current states of the other devices. The piconet coordinator 53 periodically informs all devices associated with the piconet of their current states, i.e., of whether the devices associate with the piconet. The devices associated with the piconet can accurately determine current states of other devices by receiving information elements from the piconet coordinator 53. As a result, the devices can reliably communicate with other devices. In particular, in a case of a device newly associated with the piconet, the device does not include information on existing devices associated with the piconet. However, since the device can receive information elements from the piconet coordinator 53, the device can determine current states of the other devices. As a result, the device can reliably communicate with the other devices.

The association device list updater 518 of the first device 51 updates the association device list of the first device 51 by referring to the association device list of the beacon. In other words, the association device list updater 518 updates the association device list of the first device 51 by referring to the association device list on which devices associated with the piconet are registered and AEPs of the devices are recorded. When the first device 51 receives a beacon frame from the piconet coordinator 53, the beacon frame includes updated information regarding the devices associated with the piconet. Each of the devices may have its own association device list and check its current AEP using its own local clock. This does not consider several conditions such as possible movements, breakdowns, and so on of the devices associated with the piconet. When a device informs the piconet coordinator 53 that the device is properly operating within the piconet, the piconet coordinator 53 must reset an AEP of the device to an initial value. However, this is also not considered. Thus, when the devices receive the beacon, they must update their association device lists by referring to updated information contained in the beacon, i.e., updated association device lists.

When the first device 51 requests communication with the second device 52, which is registered in the updated association device list, the AEP extractor 519 of the first device 51 extracts an AEP of the second device 52 from the updated association device list. More specifically, when the first device 51 requests the communication with the second device 52, the AEP extractor 519 must determine whether the second device 52 has associated with the piconet. In other words, the AEP extractor 519 extracts the AEP of the second device 52 from the association device list.

When the extracted AEP is shorter than the ATP, i.e., it can be assumed that the second device 52 has associated with the piconet, the inter-device communicator 5112 of the first device 51 performs the communication between the first device 51 and the second device 52.

If the extracted AEP is not shorter than the ATP, i.e., it cannot be assumed that the second device 52 has associated with the piconet, the probe request command transmitter 5110 of the first device 51 performs a peer discovery process according to IEEE 802.15.3 standards. In other words, the probe request command transmitter 5110 transmits a probe request command to the second device 52 to request confirmation regarding whether the second device 52 has associated with the piconet.

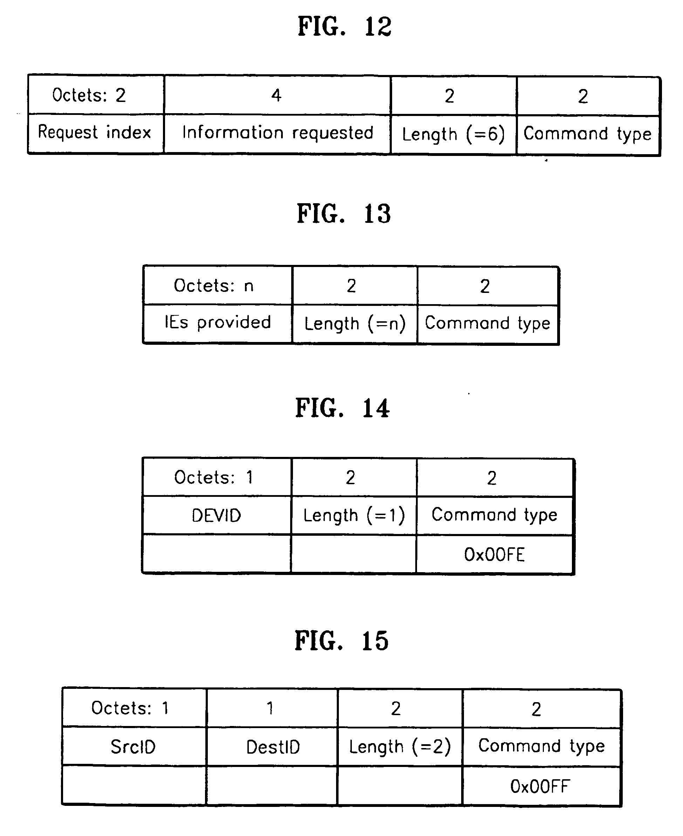

Figure 12 illustrates the structure of the probe request command according to IEEE 802.15.3. Referring to Figure 12, the probe request command includes a command type field, a length field, an information requested field, and a request index field.

The probe response command receiver 5111 of the first device 51 receives a probe response command from the second device 52 that indicates that the second device 52 has associated with the piconet.

Figure 13 illustrates the structure of a probe response command according to IEEE 802.15.3. Referring to Figure 13, the probe response command includes a command type field, a length field, and an information element provided field. When an ID of the second device 52 that is searched for is recorded in the information element provided field, the first device 51 can determine based on the ID of the second device 52, that the second device 52 has associated with the piconet.

When the probe response command receiver 5111 receives the probe response command, the inter-device communicator 5112 of the first device 51 performs the communication between the first device 51 and the second device 52. Here, the reception of the probe response command indicates that the second device 52 is properly operating within the piconet. Therefore, the first device 51 can immediately communicate with the second device 52.

When the probe response command receiver 5111 does not receive the probe response command, the device information command transmitter 5114 of the first device 51 transmits a device information command to the piconet coordinator 53 that indicates that the second device 52 which is registered on the association device list, does not associate with the piconet or cannot associate with the piconet due to a breakdown.

The device information command receiver 5312 of the piconet coordinator 53 receives the device information command from the first device 51.

When the device information command receiver 5312 receives the device information command, the association device list maker 538 of the piconet coordinator 53 deletes the second device 52 from the association device list. The device information command has newly been suggested in the present invention.

Figure 14 illustrates the structure of a device information command according to the second embodiment of the present invention. Referring to Figure 14, the device information command includes a command type field, a length field, and a device ID field. A command type is set to 0x00FE, which is a reserved command. When the piconet coordinator 53 receives the command 0x00FE recorded in the command type field, the piconet coordinator 53 determines that a device with a device ID recorded in the device ID field has disassociated with the piconet. Here, the piconet coordinator 53 deletes the device with the device ID from the association device list and broadcasts the beacon to all devices associated within the piconet to inform them of the deletion. Each of the devices updates its own association device list and cancels communication with the deleted device. To re-associate with the piconet, the deleted device must again undergo the above-described association process. This re-association process replaces an existing IEEE 802.15.3 disassociation process which requires exchanges of frames. In the second embodiment of the present invention, such a disassociation process is omitted.

When the inter-device communicator 5112 terminates the communication between the first device 51 and the second device 52, the peer information command transmitter 5113 of the first device 51 transmits a peer information command to the piconet coordinator 53 that indicates that the communication between the first device 51 and the second device 52 has ended. The peer information command receiver 5310 of the piconet coordinator 53 receives the peer information command from the first device 51, and the AEP resetter 5311 of the piconet coordinator 53 resets the AEPs of the first device 51 and the second device 52 to initial values. The association device list maker 538 of the piconet coordinator 53 records the reset AEPs of the first device 51 and the second device 52 in the association device list. The peer information command has been newly suggested in the present invention.

Figure 15 illustrates the structure of a peer information command according to the second embodiment of the present invention. Referring to Figure 15, the peer information command includes a command type field, a length field, a destination ID field, and a source ID field. A command type is set to 0x00FF, which is a reserved command. If the first device 51 finishes transmitting data to the second device 52, the first device 51 transmits a peer information command to the piconet coordinator 53, which includes the command type field including the command 0x00FF, a destination ID field including an ID of the second device 52, and a source ID field including an ID of the first device. The piconet coordinator 53 determines, by the receiving the peer information command, that the first and second devices 51 and 52 have associated with the piconet, and resets the AEPs of the first devices 51 and 52 for possible communication of the first device 51 with the second device 52. The piconet coordinator 53 records the reset AEPs of the first and second devices 51 and 52 in the association device list and broadcasts a beacon to all devices associated with the piconet to inform them of the recording. Each of the devices updates its association device list. Also, as previously described, a device which requests a communication with the first device 51 or the second device 52 can immediately communicate with the first device 51 or the second device 52 prior to the ATP.

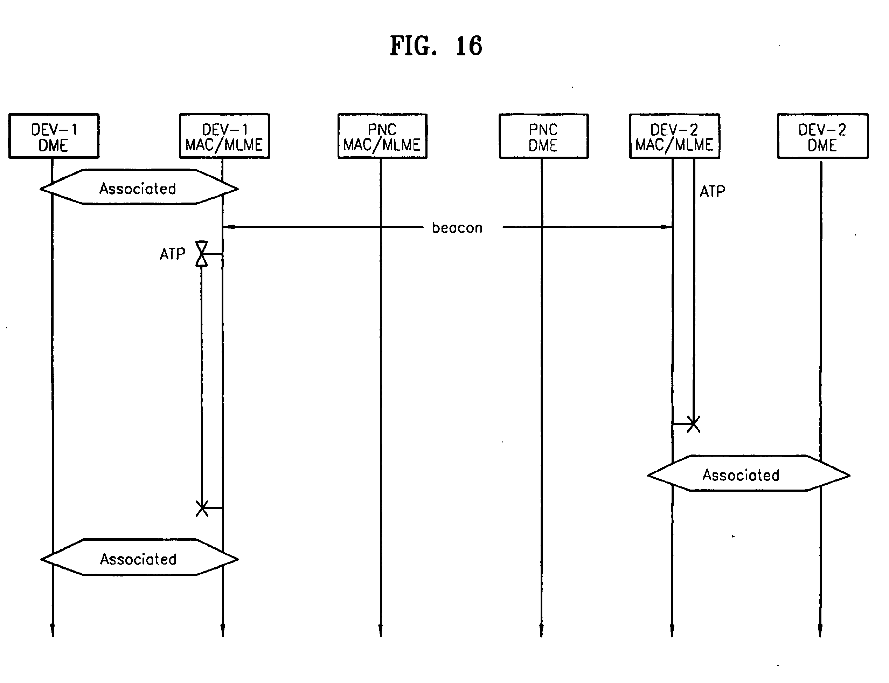

Figure 16 illustrates a process of maintaining associations of devices with a piconet according to a third embodiment of the present invention. Referring to Figure 16, a first device receives a beacon with a reset AEP of the first device from a piconet coordinator. The first device increases the AEP using its local clock from this instant in time. The first device stays associated with a piconet for an ATP. If the first device receives the beacon with the AEP before the ATP elapses, the first device maintains association with the piconet, and the above process is repeated. However, when the first device does not receive the beacon before the ATP elapses, the first device performs an IEEE 802.15.3 peer discovery process and determines, based on the result of the IEEE 802.15.3 peer discovery process, whether the first device has associated with the piconet.

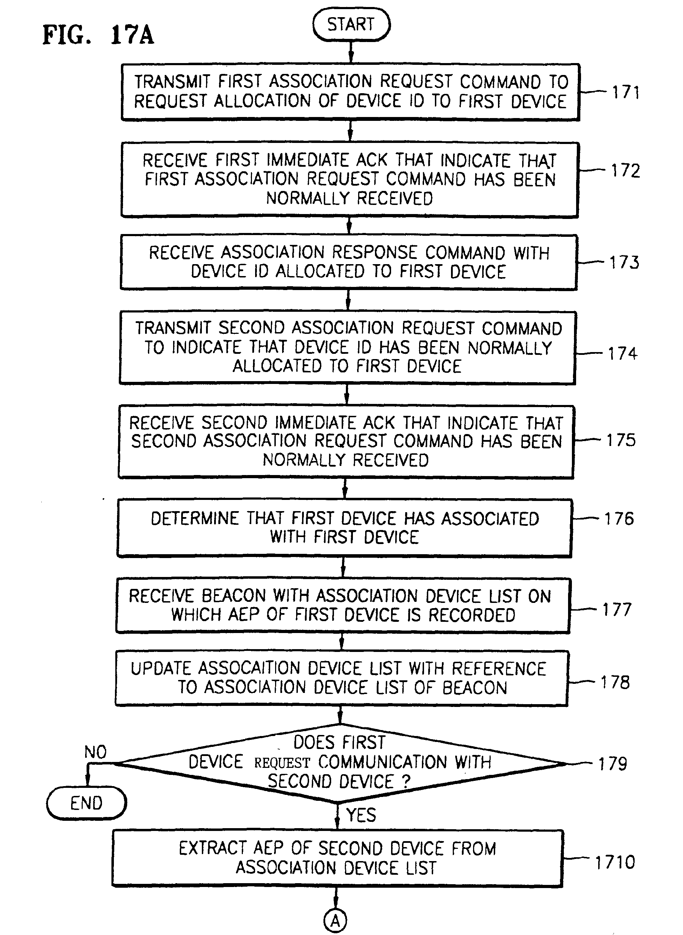

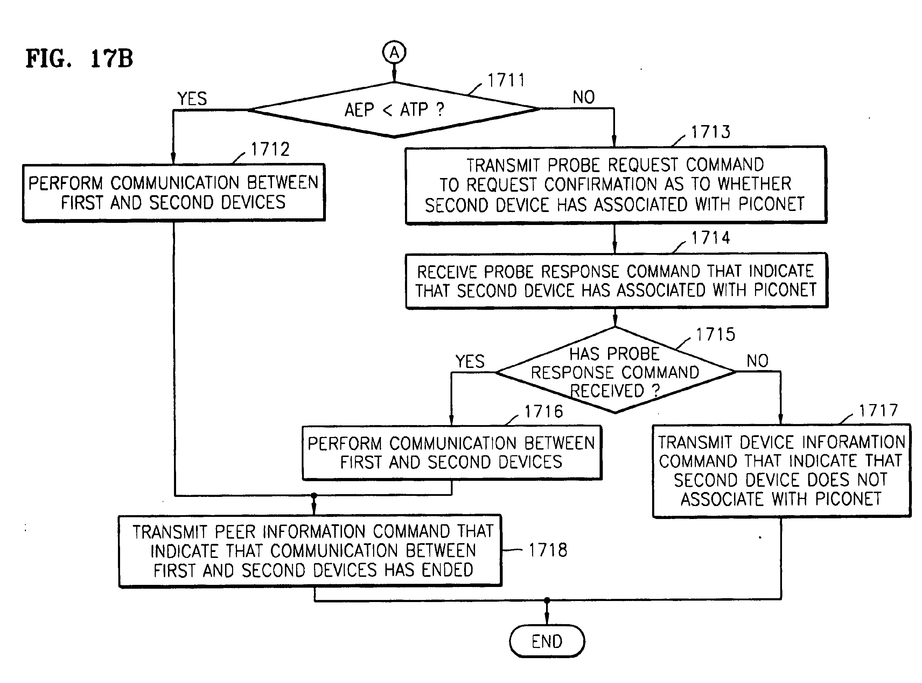

Figures 17A and 17B are flowcharts illustrating a method of associating a device with a piconet according to the third embodiment of the present invention. Referring to Figures 17A and 17B, in step 171, a first device associated with a piconet transmits a first association request command to a piconet coordinator, which manages the piconet, to request an allocation of a device ID to the first device. In step 172, the first device receives a first immediate ACK from the piconet coordinator that indicates that the first association request command has been properly received. In step 173, the first device receives an association response command with the device ID allocated to the first device from the piconet coordinator. In step 174, the first device transmits a second request command to the piconet coordinator that indicates that the ID of the association response command has been properly allocated to the first device. In step 175, the first device receives a second immediate ACK from the piconet coordinator that indicates that the second association request command has been properly received. In step 176, the first device determines that the first device has associated with the piconet. In step 177, the first device receives a beacon including an association device list from the piconet coordinator, on which an AEP of the first device has been recorded. In step 178, the first device updates its association device list by referring to the association device list of the beacon. In other words, the first device updates its association device list by referring to an association device list, on which a device associated with the piconet has been registered and an AEP of the device have been recorded. In step 179, a determination is made as to whether the first device requests communication with a second device registered on the updated association device list. If, in step 179, it is determined that the first device has requested the communication with the second device, then the first device extracts an AEP of the second device from the updated association device list, in step 1710. In step 1711, a determination is made as to whether the extracted AEP is shorter than an ATP. If, in step 1711, it is determined that the extracted AEP is shorter than the ATP, then the first device performs the communication with the second device in step 1712. If, in step 1711, it is determined that the extracted AEP is not shorter than the ATP, the first device transmits a probe request command to the second device to request confirmation regarding whether the second device has associated with the piconet, in step 1713. In step 1714, the first device receives a probe response command from the second device that indicates that the second device has associated with the piconet. In step 1715, a determination is made as to whether the first device has properly received the probe response command. If, in step 1715, it is determined that the first device has properly received the probe response command, then the first device performs the communication with the second device, in step 1716. If, in step 1715, it is determined that the first device has not properly received the probe response command, then the first device transmits a device information command to the piconet coordinator that indicates that the second device does not associate with the piconet, in step 1717. In step 1718, the first device transmits a peer information command to the piconet coordinator that indicates that the communication with the second device has ended.

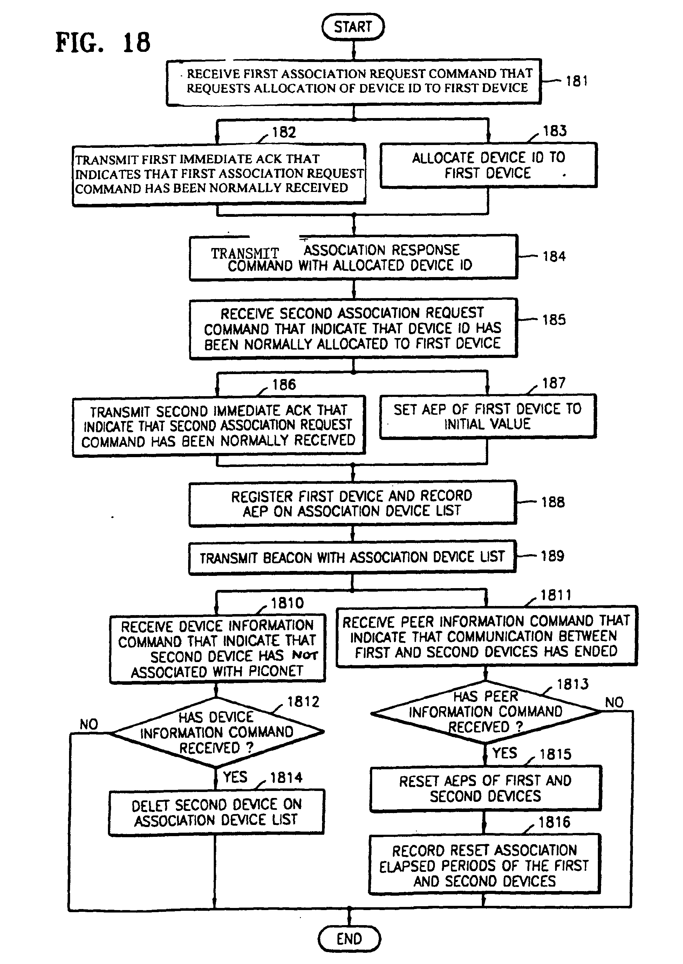

Figure 18 is a flowchart illustrating a method of managing an association of a device with a piconet according to a fourth embodiment of the present invention. Referring to Figure 18, in step 181, a piconet coordinator receives a first association request command from a first device to request an allocation of a device ID to the first device. In step 182, the piconet coordinator transmits a first immediate ACK to the first device that indicates that the first association request command has been properly received. In step 183, the piconet coordinator allocates the device ID to the first device. In step 184, the piconet coordinator transmits an association response command including the device ID allocated to the first device. In step 185, the piconet coordinator receives a second association request command from the first device that indicates the proper allocation of the device ID to the first device. In step 186, the piconet coordinator transmits a second immediate ACK to the first device that indicates that the second association request command has been properly received. In step 187, the piconet coordinator sets an AEP of the first device to an initial value. In step 188, the piconet coordinator registers the first device and records the set AEP on an association device list so that that the set AEP corresponds to the first device. In step 189, the piconet coordinator broadcasts a beacon including the association device list. In step 1810, the piconet coordinator receives a device information command from the first device that indicates that the second device does not associate with the piconet. In step 1812, a determination is made as to whether the piconet coordinator has properly received the device information command. If, in step 1812, it is determined that the piconet coordinator has properly received the device information command, then the piconet coordinator deletes the second device from the association device list, in the step 1814. In step 1811, the piconet coordinator receives a peer information command from the first device that indicates that the communication between the first and second devices has ended. In step 1813, a determination is made as to whether the piconet coordinator has properly received the peer information command. If, in step 1813, it is determined that the piconet coordinator has properly received the peer information command, then the AEP of the first device and an AEP of the second device are reset to initial values, in step 1815. In step 1816, the AEPs of the first and second devices are recorded.

As described above, in an apparatus and method for managing associations of devices with a piconet according to exemplary embodiments of the present invention, an AEP can be introduced as a new information element. Thus, devices can remain associated with the piconet without transmitting frames to a piconet coordinator for a long period of time. That is, devices in an asynchronous power save mode can maintain their membership in the piconet so that they can remain associated with the piconet without periodically transmitting frames to the piconet coordinator within an ATP. As a result, existing disassociation and re-association processes are not required, thereby limiting the number of unnecessary exchanges of the frames. Therefore, the piconet coordinator and the devices can secure effective periods, and a load on the system can be reduced.

The exemplary embodiments of the present invention can be embodied as a computer-executable program on a computer-readable recording medium and then executed in a general-purpose computer.

Also, a data structure used to perform the method according to exemplary embodiments of the present invention can be recorded on the computer-readable recording medium using several means.

The computer-readable recording medium includes storage media such as magnetic storage media (e.g., ROMs, floppy disks, hard disks, etc.), optically readable media (e.g., CD-ROMs, DVDs, etc.) and carrier waves (e.g., transmissions over the Internet).

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus that is adapted to associate devices with a piconet, **characterised by**:
an association device list updater (518) arranged to update an association device list of a first device (51) by referring to an association device list, on which the devices associated with the piconet are registered and association elapsed periods of the devices indicating an elapsed period since the devices associated with the piconet are recorded in a beacon broadcast by a piconet coordinator (53);
an association elapsed period extractor (519) arranged to extract an association elapsed period of a second device (52) from the updated association device list when the first device (51) requests communication with the second device (52) registered on the updated association device list; and
an inter-device communicator (5112) arranged to perform the communication between the first and second devices if the extracted association elapsed period is shorter than an association timeout period.

2. The apparatus of claim 1, further comprising:
a beacon receiver (517) arranged to receive the beacon that comprises the association device list from the piconet coordinator (53), which manages the piconet.

3. The apparatus of claim 2, further comprising:
a first association request command transmitter (511) arranged to transmit to the piconet coordinator (53) a first association request command to request an allocation of a device ID to the first device (51);
a first immediate ACK receiver (512) arranged to receive from the piconet coordinator (53), a first immediate ACK that indicates that the first association request command has been properly received;
an association response command receiver (513) arranged to receive an association response command that comprises the device ID allocated to the first device (51) from the piconet coordinator (53);
a second association request command transmitter (514) arranged to transmit to the piconet coordinator (53) a second association request command that indicates the proper allocation of the device ID to the first device (51); and
a second immediate ACK receiver (515) arranged to receive from the piconet coordinator (53), a second immediate ACK that indicates that the second association request command has been properly received.

4. The apparatus of claim 3, further comprising:
a piconet device association determiner (516), which, if the second immediate ACK receiver (515) receives the second immediate ACK, is arranged to determine that the first device (51) has associated with the piconet, wherein the beacon receiver (517) receives, from the piconet coordinator (53), the beacon with the association device list, on which the association elapsed period of the first device (51) is recorded.

5. The apparatus of any preceding claim, further comprising:
a probe request command transmitter (5110) arranged to transmit to the second device (52), a probe request command to request confirmation whether the second device (52) has associated with the piconet if the extracted association elapsed period is not shorter than the association timeout period; and
a probe response command receiver (5111) arranged to receive, from the second device (52), a probe response command that indicates that the second device has associated with the piconet, wherein when the probe response command receiver (5111) receives the probe response command, the inter-device communication performer (5112) is arranged to perform the communication between the first and second devices (51,52).

6. The apparatus of claim 5, further comprising a device information command transmitter (5114) arranged to transmit to the piconet coordinator (53), a device information command that indicates that the second device (52) does not associate with the piconet when the probe response command receiver (5111) does not receive the probe response command.

7. The apparatus of claim 6, wherein the device information command is a device information command frame which comprises a value that indicates that the second device does not associate with the piconet.

8. The apparatus of claim 5, 6 or 7, further comprising a peer information command transmitter (5113) arranged to transmit a peer information command to the piconet coordinator (53) that indicates that the communication between the first and second devices has ended, when the inter-device communication performer (5112) terminates the communication between the first and second devices.

9. An apparatus that is adapted to coordinate associations of devices with a piconet, **characterised by**:
a second association request command receiver (535), arranged to receive from a first device (51), a second association request command that indicates that a device ID has been properly allocated to the first device (51);
an initial association elapsed period setter (537) arranged to set an association elapsed period of the first device (51) to an initial value when the second association request command receiver (535) receives the second association request command, the association elapsed period indicating an elapsed period since the first device associated with the piconet;
an association device list maker (538) arranged to register the first device (51) and record the set association elapsed period on an association device list so that the set association elapsed period corresponds to the first device (51); and
a beacon frame transmitter (539) arranged to broadcast a beacon with the association device list to the devices.

10. The apparatus of claim 9, further comprising:
a first association request command receiver (531), arranged to receive, from the first device (51), a first association request command that requests the allocation of the device ID to the first device (51);
a first immediate ACK transmitter (532) arranged to transmit to the first device (51), a first immediate ACK that indicates that the first association request command has been properly received, when the first association request command receiver (531) receives the first association request command;
a device ID allocator (533) arranged to allocate the device ID to the first device (51) when the first association request command receiver (531) receives the first association request command;
an association response command transmitter (534), arranged to transmit an association response command that comprises the device ID to the first device (51); and
a second immediate ACK transmitter (536) arranged to transmit to the first device (51), a second immediate ACK that indicates that the second association request command has been properly received, when the second association request command receiver (535) receives the second association request command.

11. The apparatus of claim 9 or 10, further comprising:
a device information command receiver (5312) arranged to receive, from the first device (51), a device information command that indicates that a second device (52) registered on the association device list does not associate with the piconet, wherein the association device list maker (538) is arranged to delete the second device (52) from the association device list when the device information command receiver (5312) receives the device information command.

12. The apparatus of claim 11, wherein the device information command is a device information command frame which comprises a value that indicates that the second device (52) does not associate with the piconet.

13. The apparatus of any of claims 9 to 12, further comprising:
a peer information command receiver (5310) arranged to receive, from the first device (51), a peer information command that indicates that communication between the first and second devices has ended; and
an association elapsed period resetter (5311) arranged to reset association elapsed periods of the first and second devices, when the peer information command receiver (5310) receives the peer information command, wherein the association device list maker (538) is arranged to record the reset association elapsed periods of the first and second devices.

14. A system that is adapted to manage associations of devices with a piconet, **characterised by**:
a piconet coordinator (53) arranged to receive, from a first device (51), a second association request command that indicates a proper allocation of a device ID to the first device (51), set an association elapsed period of the first device (51) to an initial value, the association elapsed period indicating a period since the first device associated with the piconet, register the first device (51) and record the association elapsed period to an association device list so that the first device (51) corresponds to the association elapsed period, and broadcast the association device list in a beacon to the devices; and
a piconet-device associator arranged to update an association device list of the first device (51) by referring to the association device list received in the beacon, extract an association elapsed period of a second device (52) registered on the updated association device list from the updated association device list when the first device (51) requests communication with the second device (52), and perform the communication between the first and second devices if the extracted association elapsed period is shorter than an association timeout period.

15. A method of associating devices with a piconet, **characterised by**:
updating (178) an association device list of a first device (51) by referring to an association device list, on which the devices associated with the piconet are registered and association elapsed periods of the devices are recorded, in a beacon broadcast by a piconet coordinator (53) the association elapsed periods indicating a period since the devices associated with the piconet;
if the first device (51) requests communication with a second device (52) registered on the updated association device list, extracting (1710) an association elapsed period of the second device (52) from the updated association device list; and
if (1711) the extracted association elapsed period is shorter than an association timeout period, performing (1712) the communication between the first and second devices (51,52).

16. The method of claim 15 further comprising:
receiving (177) the beacon that comprises the association device list from the piconet coordinator (53), which manages the piconet.

17. The method of claim 15 or 16 further comprising:
transmitting (171), to the piconet coordinator (53), a first association request command to request an allocation of a device ID to the first device (51);
receiving (172), from the piconet coordinator (53), a first immediate ACK that indicates that the first association request command has been properly received;
receiving (173), from the piconet coordinator (53), an association response command that comprises the device ID allocated to the first device (51);
transmitting (174), to the piconet coordinator (53), a second association request command that indicates that the device ID of the association device command has been properly allocated to the first device (51); and
receiving (175), from the piconet coordinator (53), a second immediate ACK that indicates that the second association request command has been properly received.

18. The method of claim 17, further comprising:
if the second immediate ACK is received, determining (176) that the first device (51) has associated with the piconet, wherein in the receiving (177) of the beacon with the association device list from the piconet coordinator (53), the association device list on which the association elapsed period of the first device (51) has been recorded is received from the piconet coordinator (53).

19. The method of any of claims 15 to 18, further comprising:
if the extracted association elapsed period is not shorter than the association timeout period, transmitting (1713), to the second device (52), a probe request command to request confirmation whether the second device (52) has associated with the piconet;
receiving (1714), from the second device (52), a probe response command that indicates that the second device (52) has associated with the piconet; and
if (1715) the probe response command is received, performing (1716) the communication between the first and second devices (51,52).

20. The method of claim 19, further comprising:
transmitting (1717) a device information command that indicates that the second device (52) does not associate with the piconet to the piconet coordinator (53) if the probe response command is not received.

21. The method of claim 20, wherein the device information command is a device information command frame which comprises a value that indicates that the second device (52) does not associate with the piconet.

22. The method of claim 19, 20 or 21, further comprising transmitting (1718) a peer information command that indicates that the communication between the first and second devices has ended to the piconet coordinator (53) if the communication between the first and second devices (51,52) ends.

23. A method of coordinating associations of devices with a piconet, **characterised by**:
receiving (185), from a first device (51), a second association request command that indicates that a device ID has been properly allocated to the first device (51);
if the second association request command is received, setting (187) an association elapsed period of the first device (51) to an initial value, the association elapsed period indicating a period since the first device associated with the piconet;
registering (188) the first device (51) and recording the set association elapsed period to an association device list so that the set association elapsed period corresponds to the first device (51); and
broadcasting (189) a beacon that comprises the association device list.

24. The method of claim 23, further comprising:
receiving (181), from the first device (51), a first association request command to request the allocation of the device ID to the first device (51);
if the first association request command is received, transmitting (182), to the first device (51), a first immediate ACK that indicates that the first association request command has been properly received;
if the first association request command is received, allocating (183) the device ID to the first device (51);
transmitting (184) an association response command that comprises the device ID to the first device (51); and
if the second association request command is received (185), transmitting (186) to the first device (51), a second immediate ACK that indicates that the second association request command has been properly received.

25. The method of claim 23 or 24, further comprising:
receiving (1810), from the first device (51), a device information command that indicates that a second device (52) registered on the association device list does not associate with the piconet; and
deleting (1814) the second device (52) on the association device list if the device information command is received.

26. The method of claim 24, wherein the device information command is a device information command frame which comprises a valve that indicates that the second device (52) does not associate with the piconet.

27. The method of any of claims 23 to 26, further comprising:
receiving (1811), from the first device (51), a peer information command that indicates that communication between the first and second devices (51,52) has ended;
if (1813) the peer information command is received, resetting (1815) the association elapsed period of the first device (51) to the initial value and resetting an association elapsed period of the second device (52) to an initial value; and
recording (1816) the reset association elapsed periods of the first and second devices (51,52) on the association device list.

28. A method of managing associations of devices with a piconet, **characterised by**:
receiving (185), from a first device (51), a second association request command that indicates that a device ID has been properly allocated to the first device (51), setting (187) an association elapsed period of the first device (51) which indicates a period since the first device associated with the piconet, registering (188) the first device (51) and recording the set association elapsed period to an association device list so that the first device (51) corresponds to the set association elapsed period, and broadcasting (189) the association device list in a beacon to the devices; and
updating (178) the association device list of the first device (51) by referring to the association device list, extracting (1710) an association elapsed period of a second device (52) registered on the updated association device list from the updated association device list if the first device (51) requests communication with the second device (52), and performing (1712) the communication between the first and second devices (51,52) if (1711) the extracted association elapsed period is shorter than an association timeout period.

29. A computer-readable recording medium, comprising a computer-executable program arranged to perform the method of any of claims 15 to 28.

30. A beacon frame for broadcast by a piconet coordinator, **characterised by** an association device list on which devices associated with a piconet are registered and association elapsed periods of the devices are recorded in the beacon frame, the association elapsed periods indicating a period since the devices associated with the piconet.

31. A computer-readable recording medium, comprising the beacon frame of claim 30.

## Patentansprüche

1. Vorrichtung, die eingerichtet ist, um Geräte mit einem Piconet zu verbinden, **gekennzeichnet durch**
einen Aktualisierer (518) des Verbindungsgeräteverzeichnisses, eingerichtet zum Aktualisieren eines Verbindungsgeräteverzeichnisses eines ersten Gerätes (51) durch Bezugnahme auf ein Verbindungsgeräteverzeichnis, in dem die mit dem Piconet verbundenen Geräte registriert sind und Verbindungslaufzeiträume der Geräte, die einen Zeitraum anzeigen, der abgelaufen ist, seitdem sich die Geräte mit dem Piconet verbundenen haben, aufgezeichnet sind, in einem **durch** einen Piconet-Koordinator (53) rundgesendeten Beacon,
einen Extrahierer (519) des Verbindungslaufzeitraums, eingerichtet, um einen Verbindungslaufzeitraum eines zweiten Gerätes (52) aus dem aktualisierten Verbindungsgeräteverzeichnis zu extrahieren, wenn das erste Gerät (51) Kommunikation mit dem zweiten Gerät (52) anfordert, das in dem aktualisierten Verbindungsgeräteverzeichnis registriert ist, und
einen Kommunikator (5112) zwischen den Geräten, eingerichtet, um die Kommunikation zwischen dem ersten und dem zweiten Gerät durchzuführen, wenn der extrahierte Verbindungslaufzeitraum kürzer als ein Zeitraum der Verbindungszeitüberschreitung ist.

2. Vorrichtung nach Anspruch 1, die des Weiteren umfasst:
einen Beacon-Empfänger (517), eingerichtet, um den Beacon, der das Verbindungsgeräteverzeichnis enthält, von dem Piconet-Koordinator (53), der das Piconet verwaltet, zu empfangen.

3. Vorrichtung nach Anspruch 2, die des Weiteren umfasst:
einen ersten Verbindungsanforderungsbefehl-Sender (511), eingerichtet, an den Piconet-Koordinator (53) einen ersten Verbindungsanforderungsbefehl zu senden, um eine Zuordnung einer Geräte-ID zu dem ersten Gerät (51) anzufordern,
einen ersten Sofort-ACK-Empfänger (512), eingerichtet, um von dem Piconet-Koordinator (53) eine erste Sofort-ACK zu empfangen, die anzeigt, dass der erste Verbindungsanforderungsbefehl ordnungsgemäß empfangen worden ist,
einen Verbindungsantwortbefehl-Empfänger (513), eingerichtet, um einen Verbindungsantwortbefehl zu empfangen, der die Geräte-ID enthält, die dem ersten Gerät (51) von dem Piconet-Koordinator (53) zugeordnet wurde,
einen zweiten Verbindungsanforderungsbefehl-Sender (514), eingerichtet, um an den Piconet-Koordinator (53) einen zweiten Verbindungsanforderungsbefehl zu senden, der die ordnungsgemäße Zuordnung der Geräte-ID zu dem ersten Gerät (51) anzeigt, und
einen zweiten Sofort-ACK-Empfänger (515), eingerichtet, um von dem Piconet-Koordinator (53) eine zweite Sofort-ACK zu empfangen, die anzeigt, dass der zweite Verbindungsanforderungsbefehl ordnungsgemäß empfangen worden ist.

4. Vorrichtung nach Anspruch 3, die des Weiteren umfasst:
eine Feststellungseinrichtung (516) der Piconet-Geräteverbindung, die, wenn der zweite Sofort-ACK-Empfänger (515) die zweite Sofort-ACK empfängt, eingerichtet ist, um festzustellen, dass sich das erste Gerät (51) mit dem Piconet verbunden hat, wobei der Beacon-Empfänger (517) von dem Piconet-Koordinator (53) den Beacon mit dem Verbindungsgeräteverzeichnis empfängt, in dem der Verbindungslaufzeitraum des ersten Gerätes (51) aufgezeichnet ist.

5. Vorrichtung nach einem der vorhergehenden Ansprüche, die des Weiteren umfasst:
einen Prüfanforderungsbefehl-Sender (5110), eingerichtet, um einen Prüfanforderungsbefehl an das zweite Gerät (52) zu senden, um Bestätigung anzufordern, ob sich das zweite Gerät (52) mit dem Piconet verbunden hat, wenn der extrahierte Verbindungslaufzeitraum nicht kürzer als der Zeitraum der Verbindungszeitüberschreitung ist, und
einen Prüfantwortbefehl-Empfänger (5111), eingerichtet, um von dem zweiten Gerät (52) einen Prüfantwortbefehl zu empfangen, der anzeigt, dass sich das zweite Gerät mit dem Piconet verbunden hat, wobei, wenn der Prüfantwortbefehl-Empfänger (5111) den Prüfantwortbefehl empfängt, die Durchführungseinrichtung (5112) für Kommunikation zwischen Geräten eingerichtet ist, um die Kommunikation zwischen dem ersten und dem zweiten Gerät (51, 52) durchzuführen.

6. Vorrichtung nach Anspruch 5, die des Weiteren einen Geräteinformationsbefehl-Sender (5114) umfasst, eingerichtet, um an den Piconet-Koordinator (53) einen Geräteinformationsbefehl zu senden, der anzeigt, dass sich das zweite Gerät (52) nicht mit dem Piconet verbindet, wenn der Prüfantwortbefehl-Empfänger (511) den Prüfantwortbefehl nicht empfängt.

7. Vorrichtung nach Anspruch 6, wobei der Geräteinformationsbefehl ein Geräteinformationsbefehl-Frame ist, der einen Wert umfasst, der anzeigt, dass sich das zweite Gerät nicht mit dem Piconet verbindet.

8. Vorrichtung nach Anspruch 5, 6 oder 7, die des Weiteren einen Peer-Informationsbefehl-Sender (5113) umfasst, eingerichtet, um einen Peer-Informationsbefehl an den Piconet-Koordinator (53) zu senden, der anzeigt, dass die Kommunikation zwischen dem ersten und dem zweiten Gerät beendet ist, wenn die Durchführungseinrichtung (5112) für Kommunikation zwischen Geräten die Kommunikation zwischen dem ersten und dem zweiten Gerät einstellt.

9. Vorrichtung, die eingerichtet ist, um Verbindungen von Geräten mit einem Piconet zu koordinieren, **gekennzeichnet durch**:
einen zweiten Verbindungsanforderungsbefehl-Empfänger (535), eingerichtet, um von einem ersten Gerät (51) einen zweiten Verbindungsanforderungsbefehl zu empfangen, der anzeigt, dass eine Geräte-ID dem ersten Gerät (51) ordnungsgemäß zugeordnet worden ist,
einen Einsteller (537) des Ausgangs-Verbindungslaufzeitraums (537), eingerichtet, um einen Verbindungslaufzeitraum des ersten Gerätes (51) auf einen Ausgangswert einzustellen, wenn der zweite Verbindungsanforderungsbefehl-Empfänger (535) den zweiten Verbindungsanforderungsbefehl empfängt, wobei der Verbindungslaufzeitraum einen Zeitraum anzeigt, der abgelaufen ist, seitdem sich das erste Gerät mit dem Piconet verbunden hat,
einen Erzeuger (538) des Verbindungsgeräteverzeichnisses, eingerichtet, um das erste Gerät (51) zu registrieren und den eingestellten Verbindungslaufzeitraum in einem Verbindungsgeräteverzeichnis so aufzuzeichnen, dass der eingestellte Verbindungslaufzeitraum dem ersten Gerät (51) entspricht, und
einen Beacon-Frame-Sender (539), eingerichtet, um einen Beacon mit dem Verbindungsgeräteverzeichnis an die Geräte rundzusenden.

10. Vorrichtung nach Anspruch 9, die des Weiteren umfasst:
einen ersten Verbindungsanforderungsbefehl-Empfänger (531), eingerichtet, um von dem ersten Gerät (51) einen ersten Verbindungsanforderungsbefehl zu empfangen, der die Zuordnung der Geräte-ID zu dem ersten Gerät (51) anfordert,
einen ersten Sofort-ACK-Sender (532), eingerichtet, um an das erste Gerät (51) eine erste Sofort-ACK zu senden, die anzeigt, dass der erste Verbindungsanforderungsbefehl ordnungsgemäß empfangen worden ist, wenn der erste Verbindungsanforderungsbefehl-Empfänger (531) den ersten Verbindungsanforderungsbefehl empfängt,
einen Geräte-ID-Zuteiler (533), eingerichtet, um dem ersten Gerät (51) die Geräte-ID zuzuordnen, wenn der erste Verbindungsanforderungsbefehl-Empfänger (531) den ersten Verbindungsanforderungsbefehl empfängt, einen Verbindungsantwortbefehl-Sender (534), eingerichtet, um einen Verbindungsantwortbefehl an das erste Gerät (51) senden, der die Geräte-ID enthält, und
einen zweiten Sofort-ACK-Sender (536), eingerichtet, um an das erste Gerät (51) eine zweite Sofort-ACK zu senden, die anzeigt, dass der zweite Verbindungsanforderungsbefehl ordnungsgemäß empfangen worden ist, wenn der zweite Verbindungsanforderungsbefehl-Empfänger (535) den zweiten Verbindungsanforderungsbefehl empfängt.

11. Vorrichtung nach Anspruch 9 oder 10, die des Weiteren umfasst:
einen Geräteinformationsbefehl-Empfänger (5312), eingerichtet, um von dem ersten Gerät (51) einen Geräteinformationsbefehl zu empfangen, der anzeigt, dass sich ein zweites Gerät (52), registriert in dem Verbindungsgeräteverzeichnis, nicht mit dem Piconet verbindet, wobei der Erzeuger (538) des Verbindungsgeräteverzeichnisses eingerichtet ist, um das zweite Gerät (52) aus dem Verbindungsgeräteverzeichnis zu löschen, wenn der Geräteinformationsbefehl-Empfänger (5312) den Geräteinformationsbefehl empfängt.

12. Vorrichtung nach Anspruch 11, wobei der Geräteinformationsbefehl ein Geräteinformationsbefehl-Frame ist, der einen Wert enthält, der anzeigt, dass sich das zweite Gerät (52) nicht mit dem Piconet verbindet.

13. Vorrichtung nach einem der Ansprüche 9 bis 12, die des Weiteren umfasst:
einen Peer-Informationsbefehl-Empfänger (5310), eingerichtet, um von dem ersten Gerät (51) einen Peer-Informationsbefehl zu empfangen, der anzeigt, dass die Kommunikation zwischen dem ersten und dem zweiten Gerät beendet ist, und
einen Rücksetzer (5311) des Verbindungslaufzeitraums, eingerichtet, um die Verbindungslaufzeiträume des ersten und des zweiten Gerätes zurückzusetzen, wenn der Peer-Informationsbefehl-Empfänger (5310) den Peer-Informationsbefehl empfängt, wobei der Erzeuger (538) des Verbindungsgeräteverzeichnisses eingerichtet ist, um die zurückgesetzten Verbindungslaufzeiträume des ersten und des zweiten Gerätes aufzuzeichnen.

14. Vorrichtung, die eingerichtet ist, um Verbindungen von Geräten mit einem Piconet zu verwalten, **gekennzeichnet durch**:
einen Piconet-Koordinator (53), eingerichtet, um von einem ersten Gerät (51) einen zweiten Verbindungsanforderungsbefehl zu empfangen, der eine ordnungsgemäße Zuordnung einer Geräte-ID zu dem ersten Gerät (51) anzeigt, einen Verbindungslaufzeitraum des ersten Gerätes (51) auf einen Ausgangswert einzustellen, wobei der Verbindungslaufzeitraum einen Zeitraum anzeigt, seitdem sich die erste Vorrichtung mit dem Piconet verbunden hat, das erste Gerät (51) zu registrieren und den Verbindungslaufzeitraum in einem Verbindungsgeräteverzeichnis so aufzuzeichnen, dass das erste Gerät (51) dem Verbindungslaufzeitraum entspricht, und das Verbindungsgeräteverzeichnis in einem Beacon an die Geräte rundzusenden, und
einen Piconet-Geräte-Assoziator, eingerichtet zum Aktualisieren eines Verbindungsgeräteverzeichnisses des ersten Gerätes (51) **durch** Bezugnahme auf das in dem Beacon empfangene Verbindungsgeräteverzeichnis, zum Extrahieren eines Verbindungslaufzeitraums eines zweiten Gerätes (52), registriert in dem aktualisierten Verbindungsgeräteverzeichnis, aus dem aktualisierten Verbindungsgeräteverzeichnis, wenn das erste Gerät (51) Kommunikation mit dem zweiten Gerät (52) anfordert, und zum Durchführen der Kommunikation zwischen dem ersten und zweiten Gerät, wenn der extrahierte Verbindungslaufzeitraum kürzer als ein Zeitraum der Verbindungszeitüberschreitung ist.

15. Verfahren zum Verbinden von Geräten mit einem Piconet, **gekennzeichnet durch**:
Aktualisieren (178) eines Verbindungsgeräteverzeichnisses eines ersten Gerätes (51) **durch** Bezugnahme auf ein Verbindungsgeräteverzeichnis, in dem mit dem Piconet verbundene Geräte registriert sind und Verbindungslaufzeiträume der Geräte aufgezeichnet sind, in einer Beacon-Rundsendung **durch** einen Piconet-Koordinator (53), wobei die Verbindungslaufzeiträume einen Zeitraum anzeigen, der abgelaufen ist, seitdem sich die Geräte mit dem Piconet verbunden haben,
wenn das erste Gerät (51) Kommunikation mit einem zweiten Gerät (52) anfordert, das in dem Verbindungsgeräteverzeichnis registriert ist, Extrahieren (1710) eines Verbindungslaufzeitraums des zweiten Gerätes (52) aus dem aktualisierten Verbindungsgeräteverzeichnis, und
wenn (1711) der extrahierte Verbindungslaufzeitraum kürzer als ein Zeitraum der Verbindungszeitüberschreitung ist, Durchführen (1712) der Kommunikation zwischen dem ersten und dem zweiten Gerät (51, 52).

16. Verfahren nach Anspruch 15, das des Weiteren umfasst:
Empfangen (177) des Beacons, der das Verbindungsgeräteverzeichnis enthält, von dem Piconet-Koordinator (53), der das Piconet verwaltet.

17. Verfahren nach Anspruch 15 oder 16, das des Weiteren umfasst:
Senden (171), an den Piconet-Koordinator (53), eines ersten Verbindungsanforderungsbefehls, um eine Zuordnung einer Geräte-ID für das erste Gerät (51) anzufordern,
Empfangen (172), von dem Piconet-Koordinator (53), einer ersten Sofort-ACK, die anzeigt, dass der erste Verbindungsanforderungsbefehl ordnungsgemäß empfangen worden ist,
Empfangen (173), von dem Piconet-Koordinator (53), eines Verbindungsantwortbefehls, der die Geräte-ID enthält, die dem ersten Gerät (51) zugeordnet wurde,
Senden (174), an den Piconet-Koordinator (53), eines zweiten Verbindungsanforderungsbefehls, der anzeigt, dass die Geräte-ID des Verbindungsgerätbefehls dem ersten Gerät (51) ordnungsgemäß zugeordnet worden ist, und
Empfangen (175), von dem Piconet-Koordinator (53), einer zweiten Sofort-ACK, die anzeigt, dass der zweite Verbindungsanforderungsbefehl ordnungsgemäß empfangen worden ist.

18. Verfahren nach Anspruch 17, das des Weiteren umfasst:
wenn die zweite Sofort-ACK empfangen wird, Bestimmen (176), dass sich das erste Gerät (51) mit dem Piconet verbunden hat, wobei bei dem Empfangen (177) des Beacons mit dem Verbindungsgeräteverzeichnis von dem Piconet-Koordinator (53) das Verbindungsgeräteverzeichnis, in dem der Ablaufzeitraum des ersten Gerätes (51) aufgezeichnet worden ist, von dem Piconet-Koordinator (53) empfangen wird.

19. Verfahren nach einem der Ansprüche 15 bis 18, das des Weiteren umfasst:
wenn der extrahierte Verbindungslaufzeitraum nicht kürzer als der Zeitraum der Verbindungszeitüberschreitung ist, Senden (1713), an das zweite Gerät (52), eines Prüfanforderungsbefehls, um Bestätigung anzufordern, ob sich das zweite Gerät (52) mit dem Piconet verbunden hat,
Empfangen (1714), von dem zweiten Gerät (52), eines Prüfantwortbefehls, der anzeigt, dass sich das zweite Gerät (52) mit dem Piconet verbunden hat, und
wenn (1715) der Prüfantwortbefehl empfangen wird, Durchführen (1716) der Kommunikation zwischen dem ersten und dem zweiten Gerät (51, 52).

20. Verfahren nach Anspruch 19, das des Weiteren umfasst:
Senden (1717) eines Geräteinformationsbefehls, der anzeigt, dass sich das zweite Gerät (52) nicht mit dem Piconet verbindet, an den Piconet-Koordinator (53), wenn der Prüfantwortbefehl nicht empfangen wird.

21. Verfahren nach Anspruch 20, wobei der Geräteinformationsbefehl ein Geräteinformationsbefehl-Frame ist, der einen Wert enthält, der anzeigt, dass sich das zweite Gerät (52) nicht mit dem Piconet verbindet.

22. Verfahren nach Anspruch 19, 20 oder 21, das des Weiteren das Senden (1718) eines Peer-Informationsbefehls, der anzeigt, dass die Kommunikation zwischen dem ersten und dem zweiten Gerät beendet ist, an den Piconet-Koordinator (53) umfasst, wenn die Kommunikation zwischen dem ersten und dem zweiten Gerät (51, 52) endet.

23. Verfahren zum Koordinieren von Verbindungen von Geräten mit einem Piconet, **gekennzeichnet durch**:
Empfangen (185), von einem ersten Gerät (51), eines zweiten Verbindungsanforderungsbefehls, der anzeigt, dass dem ersten Gerät (51) eine Geräte-ID ordnungsgemäß zugeordnet worden ist,
wenn der zweite Verbindungsanforderungsbefehl empfangen wird, Einstellen (187) eines Verbindungslaufzeitraums des ersten Gerätes (51) auf einen Ausgangswert, wobei der Verbindungslaufzeitraum einen Zeitraum anzeigt, der abgelaufen ist, seitdem sich das erste Gerät mit dem Piconet verbunden hat,
Registrieren (188) des ersten Gerätes (51) und Aufzeichnen des eingestellten Verbindungslaufzeitraums in einem Verbindungsgeräteverzeichnis so, dass der eingestellte Verbindungslaufzeitraum dem ersten Gerät (51) entspricht, und
Rundsenden (189) eines Beacons, der das Verbindungsgeräteverzeichnis enthält.

24. Verfahren nach Anspruch 23, das des Weiteren umfasst:
Empfangen (181), von dem ersten Gerät (51), eines ersten Verbindungsanforderungsbefehls, um Zuordnung der Geräte-ID zu dem ersten Gerät (51) anzufordern,
wenn der erste Verbindungsanforderungsbefehl empfangen wird, Senden (182), an das erste Gerät (51), einer ersten Sofort-ACK, die anzeigt, dass der erste Verbindungsanforderungsbefehl ordnungsgemäß empfangen worden ist,
wenn der erste Verbindungsanforderungsbefehl empfangen wird, Zuordnen (183) der Geräte-ID zu dem ersten Gerät (51),
Senden (184) eines Verbindungsantwortbefehls, der die Geräte-ID enthält, an das erste Gerät (51) und
wenn der zweite Verbindungsanforderungsbefehl empfangen wird (185), Senden (186), an das erste Gerät (51), einer zweiten Sofort-ACK, die anzeigt, dass der zweite Verbindungsanforderungsbefehl ordnungsgemäß empfangen worden ist.

25. Verfahren nach Anspruch 23 oder 24, das des Weiteren umfasst:
Empfangen (1810), von dem ersten Gerät (51), eines Geräteinformationsbefehls, der anzeigt, dass sich ein zweites Gerät (52), registriert in dem Verbindungsgeräteverzeichnis, nicht mit dem Piconet verbindet, und
Löschen (1814) des zweiten Gerätes in dem Verbindungsgeräteverzeichnis, wenn der Geräteinformationsbefehl empfangen wird.

26. Verfahren nach Anspruch 24, wobei der Geräteinformationsbefehl ein Geräteinformationsbefehl-Frame ist, der einen Wert enthält, der anzeigt, dass sich das zweite Gerät (52) nicht mit dem Piconet verbindet.

27. Verfahren nach einem der Ansprüche 23 bis 26, das des Weiteren umfasst:
Empfangen (1811), von dem ersten Gerät (51), eines Peer-Informationsbefehls, der anzeigt, dass die Kommunikation zwischen dem ersten und dem zweiten Gerät (51, 52) beendet ist,
wenn (1813) der Peer-Informationsbefehl empfangen wird, Rücksetzen (1815) des Verbindungslaufzeitraums des ersten Gerätes (51) auf den Ausgangswert und Rücksetzen eines Verbindungslaufzeitraums des zweiten Gerätes (52) auf einen Ausgangswert, und
Aufzeichnen (1816) der zurückgesetzten Verbindungslaufzeiträume des ersten und des zweiten Gerätes (51, 52) in dem Verbindungsgeräteverzeichnis.

28. Verfahren zum Verwalten von Verbindungen von Geräten mit einem Piconet, **gekennzeichnet durch**:
Empfangen (185), von einem ersten Gerät (51), eines zweiten Verbindungsanforderungsbefehls, der anzeigt, dass dem ersten Gerät (51) eine Geräte-ID ordnungsgemäß zugeordnet worden ist, Einstellen (187) eines Verbindungslaufzeitraums des ersten Gerätes (51), der einen Zeitraum anzeigt, der abgelaufen ist, seitdem sich das erste Gerät mit dem Piconet verbunden hat, Registrieren (188) des ersten Gerätes (51) und Aufzeichnen des eingestellten Verbindungslaufzeitraums in einem Verbindungsgeräteverzeichnis so, dass das erste Gerät (51) dem eingestellten Verbindungslaufzeitraum entspricht, und Rundsenden (189) des Verbindungsgeräteverzeichnisses in einem Beacon zu den Geräten und
Aktualisieren (178) des Verbindungsgeräteverzeichnisses des ersten Gerätes (51) durch Bezugnahme auf das Verbindungsgeräteverzeichnis, Extrahieren (1710) eines Verbindungslaufzeitraums eines zweiten Gerätes (52), registriert in dem aktualisierten Verbindungsgeräteverzeichnis, aus dem aktualisierten Verbindungsgeräteverzeichnis, wenn das erste Gerät (51) Kommunikation mit dem zweiten Gerät (52) anfordert, und Durchführen (1712) der Kommunikation zwischen dem ersten und zweiten Gerät (51, 52), wenn (1711) der extrahierte Verbindungslaufzeitraum kürzer als ein Zeitraum der Verbindungszeitüberschreitung ist.

29. Computerlesbares Aufzeichnungsmedium, ein durch einen Computer ausführbares Programm umfassend, das eingerichtet ist, um das Verfahren nach einem der Ansprüche 15 bis 18 auszuführen.

30. Beacon-Frame zum Rundsenden durch einen Piconet-Koordinator, **gekennzeichnet durch** ein Verbindungsgeräteverzeichnis, in dem mit einem Piconet verbundene Geräte registriert sind und Verbindungslaufzeiträume der Geräte, aufgezeichnet sind, in dem Beacon-Frame, wobei die Verbindungslaufzeiträume einen Zeitraum anzeigen, der abgelaufen ist, seitdem sich die Geräte mit dem Piconet verbunden haben.

31. Computerlesbares Aufzeichnungsmedium, das den Beacon-Frame des Anspruchs 30 umfasst.

## Revendications

1. Appareil qui est adapté pour associer des dispositifs à un picoréseau, **caractérisé par** :
un élément de mise à jour de liste de dispositifs d'association (518) agencé afin de mettre à jour une liste de dispositifs d'association d'un premier dispositif (51) en se reportant à une liste de dispositifs d'association, sur laquelle les dispositifs associés au picoréseau sont enregistrés et des périodes écoulées d'association des dispositifs indiquant une période écoulée depuis que les dispositifs ont été associés au picoréseau sont enregistrées dans une diffusion de balise par un coordinateur de picoréseau (53),
un extracteur de périodes écoulées d'association (519) agencé pour extraire une période écoulée d'association d'un second dispositif (52) de la liste de dispositifs d'association mise à jour lorsque le premier dispositif (51) demande une communication avec le second dispositif (52) enregistré dans la liste de dispositifs d'association mise à jour ;
un communicateur inter-dispositifs (5112) agencé pour exécuter la communication entre les premier et second dispositifs lorsque la période écoulée d'association extraite est plus courte que celle d'une période de temporisation d'association.

2. Appareil selon la revendication 1, comportant en outre :
un récepteur de balise (517) agencé afin de recevoir la balise qui comporte la liste de dispositifs d'association du coordinateur de picoréseau (53), qui gère le picoréseau.

3. Appareil selon la revendication 2, comportant en outre :
un émetteur de première commande de demande d'association (511) agencé pour transmettre, au coordinateur de picoréseau (53), une première commande de demande d'association pour demander une affectation d'une identification (ID) de dispositif au premier dispositif (51) ;
un récepteur de premier accusé de réception (ACK) immédiat (512) agencé pour recevoir, du coordinateur de picoréseau (53), un premier accusé de réception (ACK) immédiat qui indique que la première commande de demande d'association a bien été correctement reçue ;
un récepteur de commande de réponse d'association (513) agencé pour recevoir une commande de réponse d'association qui comporte l'identification (ID) de dispositif affectée au premier dispositif (51) à partir du coordinateur de picoréseau (53),
un émetteur de seconde commande de demande d'association (514) agencé pour transmettre, au coordinateur de picoréseau (53), une seconde commande de demande d'association qui indique l'affectation correcte de l'identification (ID) de dispositif au premier dispositif (51) ; et
un récepteur de second accusé de réception (ACK) immédiat (515) agencé pour recevoir du coordinateur de picoréseau (53), un second accusé de réception (ACK) immédiat qui indique que la seconde commande de demande d'association a été correctement reçue.

4. Appareil selon la revendication 3, comportant en outre :
un élément de détermination d'association de dispositifs au picoréseau (516), qui, lorsque le second récepteur d'accusé de réception (ACK) immédiat (515) reçoit le second accusé de réception (ACK) immédiat, est agencé pour déterminer que le premier dispositif (51) a été associé au picoréseau, dans lequel le récepteur de balise (517) reçoit, à partir du coordinateur de picoréseau (53), la balise avec la liste de dispositifs d'association, sur laquelle la période écoulée d'association du premier dispositif (51) est enregistrée.

5. Appareil selon l'une quelconque des revendications précédentes, comportant en outre :
un émetteur de commande de demande de sonde (5110) agencé pour transmettre au second dispositif (52), une commande de demande de sonde pour demander confirmation que le second dispositif (52) a été associé au picoréseau si la période écoulée d'association extraite n'est pas plus courte que la période de temporisation d'association ; et
un récepteur de commande de réponse de sonde (5111) agencé pour recevoir, à partir du second dispositif (52), une commande de réponse de sonde qui indique que le second dispositif est associé au picoréseau, dans lequel, lorsque le récepteur de commande de réponse de sonde (5111) reçoit la commande de réponse de sonde, l'élément d'exécution de communication inter-dispositifs (5112) est agencé pour exécuter la communication entre les premier et second dispositifs (51, 52).

6. Appareil selon la revendication 5, comportant en outre un émetteur de commande d'information de dispositif (5114) agencé pour transmettre, au coordinateur de picoréseau (53), une commande d'information de dispositif qui indique que le second dispositif (52) ne s'associe pas au picoréseau lorsque le récepteur de commande de réponse de sonde (5111) ne reçoit pas la commande de réponse de sonde.

7. Appareil selon la revendication 6, dans lequel la commande d'information de dispositif est une trame de commande d'information de dispositif qui comporte une valeur qui indique que le second dispositif ne s'associe pas au picoréseau.

8. Appareil selon la revendication 5, 6 ou 7, comportant en outre un émetteur de commande d'information d'homologue (5113) agencé pour transmettre une commande d'information d'homologue au coordinateur de picoréseau (53) qui indique que la communication entre les premier et second dispositifs a pris fin, lorsque l'élément d'exécution de communication inter-dispositifs (5112) met fin à la communication entre les premier et second dispositifs.

9. Appareil qui est adapté pour coordonner des associations de dispositifs avec un picoréseau, **caractérisé par** :
un récepteur de seconde commande de demande d'association (535), agencé pour recevoir, d'un premier dispositif (51), une seconde commande de demande d'association qui indique qu'une identification (ID) de dispositif a été correctement affectée au premier dispositif (51) ;
un élément de définition de période écoulée d'association initiale (537) agencé pour définir une période écoulée d'association du premier dispositif (51) à une valeur initiale lorsque le récepteur de seconde commande de demande d'association (535) reçoit la seconde commande de demande d'association, la période écoulée d'association indiquant une période écoulée depuis le moment où le premier dispositif a été associé au picoréseau ;
un élément de fabrication de liste de dispositifs d'association (538) agencé pour enregistrer le premier dispositif (51) et pour enregistrer la période écoulée d'association définie dans une liste de dispositifs d'association de sorte que la période écoulée d'association définie correspond au premier dispositif (51) ; et
un émetteur de trame de balise (539) agencé pour diffuser une balise avec la liste de dispositifs d'association aux dispositifs.

10. Appareil selon la revendication 9, comportant en outre :
un récepteur de première commande de demande d'association (531), agencé pour recevoir, à partir du premier dispositif (51), une première commande de demande d'association qui demande l'affectation de l'identification (ID) de dispositif au premier dispositif (51) ;
un émetteur de premier accusé de réception (ACK) immédiat (532) agencé pour transmettre, au premier dispositif (51), un premier accusé de réception (ACK) immédiat qui indique que la première commande de demande d'association a été correctement reçue, lorsque le récepteur de première commande de demande d'association (531) reçoit la première commande de demande d'association ;
un allocateur d'identification (ID) de dispositif (533) agencé pour affecter l'identification (ID) de dispositif au premier dispositif (51) lorsque le récepteur de première commande de demande d'association (531) reçoit la première commande de demande d'association ;
un émetteur de commande de réponse d'association (534), agencé pour transmettre une commande de réponse d'association qui comporte l'identification (ID) de dispositif au premier dispositif (51) ; et
un émetteur de second accusé de réception (ACK) immédiat (536) agencé pour transmettre au premier dispositif (51), un second accusé de réception (ACK) immédiat qui indique que la seconde commande de demande d'association a été correctement reçue, lorsque le second récepteur de commande de demande d'association (535) reçoit la seconde commande de demande d'association.

11. Appareil selon la revendication 9 ou 10, comportant en outre :
un récepteur de commande d'information de dispositif (5312) agencé pour recevoir, à partir du premier dispositif (51), une commande d'information de dispositif qui indique qu'un second dispositif (52) enregistré dans la liste de dispositifs d'association ne s'associe pas au picoréseau, dans lequel l'élément de fabrication de liste de dispositifs d'association (538) est agencé pour supprimer le second dispositif (52) de la liste de dispositifs d'association lorsque le récepteur de commande d'information de dispositif (5312) reçoit la commande d'information de dispositif.

12. Appareil selon la revendication 11, dans lequel la commande d'information de dispositif est une trame de commande d'information de dispositif qui comporte une valeur qui indique que le second dispositif (52) ne s'associe pas au picoréseau.

13. Appareil selon l'une quelconque des revendications 9 à 12, comportant en outre :
un récepteur de commande d'information d'homologue (5310) agencé pour recevoir, à partir du premier dispositif (51), une commande d'information d'homologue qui indique que la communication entre les premier et second dispositifs est terminée ; et
un élément de réinitialisation de période écoulée d'association (5311) agencé pour réinitialiser des périodes écoulées d'association des premier et second dispositifs, lorsque le récepteur de commande d'information d'homologue (5310) reçoit la commande d'information d'homologue, dans lequel l'élément de fabrication de liste de dispositifs d'association (538) est agencé pour enregistrer les périodes écoulées d'association réinitialisées des premier et second dispositifs.

14. Système qui est adapté pour gérer des associations de dispositifs avec un picoréseau, **caractérisé par**:
un coordinateur de picoréseau (53) agencé pour recevoir, d'un premier dispositif (51), une seconde commande de demande d'association qui indique une affectation correcte d'une identification (ID) de dispositif au premier dispositif (51), définir une période écoulée d'association du premier dispositif (51) à une valeur initiale, la période écoulée d'association indiquant une période qui s'est écoulée depuis que le premier dispositif a été associé au picoréseau, enregistrer le premier dispositif (51) et enregistrer la période écoulée d'association dans une liste de dispositifs d'association de sorte que le premier dispositif (51) correspond à la période écoulée d'association, et diffuser la liste de dispositifs d'association dans une balise aux dispositifs ; et
un élément d'association de dispositif au picoréseau agencé pour mettre à jour une liste de dispositifs d'association du premier dispositif (51) en se reportant à la liste de dispositifs d'association reçue dans la balise, extraire une période écoulée d'association d'un second dispositif (52) enregistré dans la liste de dispositifs d'association mise à jour à partir de la liste de dispositifs d'association mise à jour lorsque le premier dispositif (51) demande une communication avec le second dispositif (52), et exécuter la communication entre les premier et second dispositifs lorsque la période écoulée d'association extraite est plus courte qu'une période de temporisation d'association.

15. Procédé pour associer des dispositifs à un picoréseau, **caractérisée par** les étapes consistant à :
mettre à jour (178) une liste de dispositifs d'association d'un premier dispositif (51) en se reportant à une liste de dispositifs d'association, dans laquelle les dispositifs associés au picoréseau sont enregistrés et des périodes écoulées d'association des dispositifs sont enregistrées, dans une diffusion de balise, par un coordinateur de picoréseau (53), les périodes écoulées d'association indiquant une période écoulée depuis que les dispositifs on été associés au picoréseau ;
si le premier dispositif (51) demande une communication avec un second dispositif (52) enregistré dans la liste de dispositifs d'association mise à jour, extraire (1710) une période écoulée d'association du second dispositif (52) à partir de la liste de dispositifs d'association mise à jour ; et
si (1711) la période écoulée d'association extraite est plus courte qu'une période de temporisation d'association, exécuter (1712) la communication entre les premier et second dispositifs (51, 52).

16. Procédé selon la revendication 15 comportant en outre l'étape consistant à :
recevoir (177) la balise qui comporte la liste de dispositifs d'association du coordinateur de picoréseau (53), qui gère le picoréseau.

17. Procédé selon la revendication 15 ou 16 comportant en outre les étapes consistant à :
transmettre (171), au coordinateur de picoréseau (53), une première commande de demande d'association pour demander une affectation d'une identification (ID) de dispositif au premier dispositif (51) ;
recevoir (172), à partir du coordinateur de picoréseau (53), un premier accusé de réception (ACK) immédiat qui indique que la première commande de demande d'association a été reçue correctement ;
recevoir (173), à partir du coordinateur de picoréseau (53), une commande de réponse d'association qui comporte l'identification (ID) de dispositif affectée au premier dispositif (51) ;
transmettre (174), au coordinateur de picoréseau (53), une seconde commande de demande d'association qui indique que l'identification (ID) de dispositif de la commande de dispositif d'association a été correctement affectée au premier dispositif (51) ; et
recevoir (175), à partir du coordinateur de picoréseau (53), un second accusé de réception (ACK) immédiat qui indique que la seconde commande de demande d'association a été correctement reçue.

18. Procédé selon la revendication 17, comportant en outre l'étape consistant à :
si le second accusé de réception (ACK) immédiat est reçu, déterminer (176) que le premier dispositif (51) a été associé au picoréseau, dans lequel lors de la réception (177) de la balise avec la liste de dispositifs d'association à partir du coordinateur de picoréseau (53), la liste de dispositifs d'association dans laquelle la période écoulée d'association du premier dispositif (51) a été enregistrée est reçue à partir du coordinateur de picoréseau (53).

19. Procédé selon l'une quelconque des revendications 15 à 18, comportant en outre les étapes consistant à :
si la période écoulée d'association extraite n'est pas plus courte que la période de temporisation d'association, transmettre (1713), au second dispositif (52), une commande de demande de sonde pour demander une confirmation indiquant si le second dispositif (52) a été associé au picoréseau ;
recevoir (1714), à partir du second dispositif (52), une commande de réponse de sonde qui indique que le second dispositif (52) a été associé au picoréseau ; et
si (1715) la commande de réponse de sonde est reçue, exécuter (1716) la communication entre les premier et second dispositifs (51, 52).

20. Procédé selon la revendication 19, comportant en outre l'étape consistant à :
transmettre (1717) une commande d'information de dispositif qui indique que le second dispositif (52) ne s'associe pas au picoréseau au niveau du coordinateur de picoréseau (53) si la commande de réponse de sonde n'est pas reçue.

21. Procédé selon la revendication 20, dans lequel la commande d'information de dispositif est une trame de commande d'information de dispositif qui comporte une valeur qui indique que le second dispositif (52) ne s'associe pas au picoréseau.

22. Procédé selon la revendication 19, 20 ou 21, comportant en outre l'étape consistant à transmettre (1718) une commande d'information d'homologue qui indique que la communication entre les premier et second dispositifs a pris fin, au coordinateur de picoréseau (53), si la communication entre les premier et second dispositifs (51, 52) prend fin.

23. Procédé pour coordonner des associations de dispositifs avec un picoréseau, **caractérisé par** les étapes consistant à :
recevoir (185) d'un premier dispositif (51), une seconde commande de demande d'association qui indique qu'une identification (ID) de dispositif a été correctement affectée au premier dispositif (51) ;
si la seconde commande de demande d'association est reçue, définir (187) une période écoulée d'association du premier dispositif (51) à une valeur initiale, la période écoulée d'association indiquant une période écoulée depuis que le premier dispositif a été associé au picoréseau ;
enregistrer (188) le premier dispositif (51) et enregistrer la période écoulée d'association définie dans une liste de dispositifs d'association de sorte que la période écoulée d'association définie correspond au premier dispositif (51) ; et
diffuser (189) une balise qui comporte la liste de dispositifs d'association.

24. Procédé selon la revendication 23, comportant en outre les étapes consistant à :
recevoir (181), à partir du premier dispositif (51), une première commande de demande d'association pour demander l'affectation de l'identification (ID) de dispositif au premier dispositif (51) ;
si la première commande de demande d'association est reçue, transmettre (182), au premier dispositif (51), un premier accusé de réception (ACK) immédiat qui indique que la première commande de demande d'association a été reçue correctement ;
si la première commande de demande d'association est reçue, affecter (183) l'identification (ID) de dispositif au premier dispositif (51) ; et
transmettre (184) une commande de réponse d'association qui comporte l'identification (ID) de dispositif au premier dispositif (51) ; et
si la seconde commande de demande d'association est reçue (185), transmettre (186) au premier dispositif (51), un second accusé de réception (ACK) immédiat qui indique que la seconde commande de demande d'association a été reçue correctement.

25. Procédé selon la revendication 23 ou 24, comportant en outre les étapes consistant à :
recevoir (1810), à partir du premier dispositif (51), une commande d'information de dispositif qui indique qu'un second dispositif (52) enregistré dans la liste de dispositifs d'association ne s'associe pas au picoréseau ; et
supprimer (1814) le second dispositif (52) dans la liste de dispositifs d'association si la commande d'information de dispositif est reçue.

26. Procédé selon la revendication 24, dans lequel la commande d'information de dispositif est une trame de commande d'information de dispositif qui comporte un témoin qui indique que le second dispositif (52) ne s'associe pas au picoréseau.

27. Procédé selon l'une quelconque des revendications 23 à 26, comportant en outre les étapes consistant à :
recevoir (1811), à partir du premier dispositif (51), une commande d'information d'homologue qui indique que la communication entre les premier et second dispositifs (51, 52) a pris fin ; et
si (1813) la commande d'information d'homologue est reçue, réinitialiser (1815) la période écoulée d'association du premier dispositif (51) à la valeur initiale et réinitialiser une période écoulée d'association du second dispositif (52) à une valeur initiale ; et
enregistrer (1816) les périodes écoulées d'association réinitialisées des premier et second dispositifs (51, 52) dans la liste de dispositifs d'association.

28. Procédé pour gérer des associations de dispositifs à un picoréseau, **caractérisé par** les étapes consistant à :
recevoir (185), d'un premier dispositif (51), une seconde commande de demande d'association qui indique qu'une identification (ID) de dispositif a été correctement affectée au premier dispositif (51), définir (187) une période écoulée d'association du premier dispositif (51), qui indique une période écoulée depuis que le premier dispositif a été associé au picoréseau, enregistrer (188) le premier dispositif (51) et enregistrer la période écoulée d'association définie dans une liste de dispositifs d'association de sorte que le premier dispositif (51) correspond à la période écoulée d'association définie, et diffuser (189) la liste de dispositifs d'association dans une balise aux dispositifs, et
mettre à jour (178) la liste de dispositifs d'association du premier dispositif (51) en se reportant à la liste de dispositifs d'association, extraire (1710) une période écoulée d'association d'un second dispositif (52) enregistré dans la liste de dispositifs d'association mise à jour à partir de la liste de dispositifs d'association mise à jour si le premier dispositif (51) demande une communication avec le second dispositif (52), et exécuter (1712) la communication entre les premier et second dispositifs (51, 52), si (1711) la période écoulée d'association extraite est plus courte que celle d'une période de temporisation d'association.

29. Support d'enregistrement lisible par ordinateur, comportant un programme exécutable par ordinateur agencé pour exécuter le procédé selon l'une quelconque des revendications 15 à 28.

30. Trame de balise destinée à être diffusée par un coordinateur de picoréseau, **caractérisée par** une liste de dispositifs d'association dans laquelle des dispositifs associés à un picoréseau sont enregistrés et des périodes écoulées d'association des dispositifs sont enregistrées dans la trame de balise, les périodes écoulées d'association indiquant une période écoulée depuis que les dispositifs ont été associés au picoréseau.

31. Support d'enregistrement lisible par ordinateur, comportant la trame de balise selon la revendication 30.
